(19) Europäisches Patentamt
European Patent Office
Office européen des brevets

(11) EP 1 372 348 B1

(12) # EUROPÄISCHE PATENTSCHRIFT

(45) Veröffentlichungstag und Bekanntmachung des Hinweises auf die Patenterteilung:
**17.08.2005 Patentblatt 2005/33**

(51) Int Cl.7: **H04Q 7/38**

(21) Anmeldenummer: **02013403.7**

(22) Anmeldetag: **12.06.2002**

(54) **Verfahren zur Datenübertragung in einem Funkkommunikationssystem**

Method for data transmission in a radio communication system

Méthode pour la transmission de données dans un systeme de communication par radio

(84) Benannte Vertragsstaaten:
**DE ES FR**

(43) Veröffentlichungstag der Anmeldung:
**17.12.2003 Patentblatt 2003/51**

(73) Patentinhaber: **SIEMENS AKTIENGESELLSCHAFT**
**80333 München (DE)**

(72) Erfinder:
- **Ball, Carsten**
  **76764 Rheinzabern (DE)**
- **Müllner, Robert**
  **81379 M-nchen (DE)**
- **Spring, Gustav**
  **1100 Wien (AT)**
- **Treml, Franz**
  **85221 Dachau (DE)**
- **Winkler, Hubert**
  **2732 Willendorf (AT)**

(56) Entgegenhaltungen:
**EP-A- 0 946 008** **EP-A- 1 041 771**
**US-A- 5 583 869** **US-A- 5 649 299**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Ein Beispiel für ein Funkkommunikationssystem ist das bekannte GSM-Mobilfunksystem sowie dessen Weiterentwicklung mit einem Paketdatendienst GPRS bzw. EGPRS, deren Architektur z. B. in P. Walke, Mobilfunknetze und ihre Protokolle, Band 1, Teubner Verlag Stuttgart, 1998, Seite 138 bis 151 und Seite 295 bis 311, beschrieben ist. Dabei ist zur Übertragung eines Teilnehmersignals jeweils ein durch einen schmalbandigen Frequenzbereich gebildeter Kanal vorgesehen. Die Übertragung in einem Kanal erfolgt in Zeitrahmen, die mehrere Zeitschlitze umfassen. Jeder Zeitschlitz definiert ein Kanalelement. Da sich ein Teilnehmersignal in einem Kanalelement in Frequenz und Zeit von den übrigen Teilnehmersignalen unterscheidet, kann die Funkstation eine Detektion der Daten des Teilnehmersignals vornehmen. In neueren Funkkommunikationssystemen, wie z. B. dem UMTS-System, werden die einzelnen Teilnehmer darüber hinaus durch unterschiedliche Spreizcodes unterschieden.

Bei der paketvermittelten Datenübertragung erfolgt die Datenübertragung für mehrere Teilnehmer im Zeitmultiplex über ein und dasselbe physikalische Kanalelement. Jeder Teilnehmer kann dabei auch mehrere physikalische Kanalelemente gleichzeitig belegen (Multislot).

Die Zuweisung der einzelnen Teilnehmer auf ein Kanalelement erfolgt über eine Paketdatensteuereinheit. In der Paketdatensteuereinheit ist eine Warteschlangenverwaltung vorgesehen, die die ankommenden Datenströme der verschiedenen Verbindungen auf die vorgegebenen Kanalelemente multiplext.

Es ist bekannt (siehe z. B. Boudewijn R. Haverkort "Performance of computer communication systems" (John Wiley & Sons - ISBN 0 471 97228 2 - 1998 - Kapitel 9 (Seite 173 - 195)), die Datenströme nach einem sogenannten Polling-System auf ein Kanalelement zu multiplexen. Dabei werden der Reihe nach Datenblöcke aus den ankommenden Datenströmen entnommen und nacheinander übertragen. Eine spezielle Variante des Polling-Systems ist als Round-Robin-Verfahren bekannt.

In zukünftigen Mobilfunksystemen mit Paketdatendiensten, wie z. B. GPRS oder EGPRS, ist vorgesehen, jedem Teilnehmer eine Dienstgüte mit einer zu erzielenden Datenrate beziehungsweise maximalen Übertragungs-/Verzögerungszeit und/oder einer bestimmten Zuverlässigkeit zuzuordnen. Die Dienstgüte wird beipielsweise aus den Parametern traffic class, traffic handling priority, allocation/retention priority, radio priority, service precedence etc. bestimmt. Hierbei können auch eine gemeinsame zu erzielende Datenrate beziehungsweise maximalen Übertragungs-/Verzögerungszeit und/oder einer bestimmten Zuverlässigkeit für alle Teilnehmer erzielt werden, wobei sich die Dienste dann nur anhand der Dienstgüten-Anforderungen unterscheiden. Teilnehmer mit einer höheren Dienstgüte sollten dann gegenüber Teilnehmern mit einer geringeren Dienstgüte bevorzugt behandelt werden. Im Standard (3G TS 23.107 V3.3.0 (2000-06)) wird die Implementierung offengelassen. Im Standard wird lediglich beschrieben, dass die Netzverwaltung die vorhandenen Übertragungskapazitäten auf die verschiedenen Dienste aufteilt, wobei interaktiven Diensten eine höhere Priorität als Hintergrunddiensten zugewiesen wird. Hintergrunddienste nutzen die Übertragungskapazitäten nur, wenn diese nicht von interaktiven Diensten benötigt werden.

Aus EP 0 946 008 A2 ist ein Verfahren zur Kommunikationskontrolle bekannt. Dabei werden Quality-of-Service-Parameter von bestehenden Verbindungen dann schrittweise herabgesetzt, wenn ein geforderter Quality-of-Service-Level nicht bereitgestellt werden kann. Die Verbindungen werden dann mit reduziertem Quality-of-Service-Level durchgeführt.

Aus US 5,649,299 ist ein Verfahren zur Anpassung eines digitalen Funkkommunikationssystems an einen zunehmenden Teilnehmerverkehr bekannt. Dabei werden Teilnehmer, die eine hohe Vocoder-Datenrate und eine geringe Priorität aufweisen, veranlasst, eine zugeordnete Datenrate zu reduzieren. Dadurch wird eine Anpassung von Vocoder-Datenraten an eine Teilnehmeranzahl erreicht.

Aus US 5,583,869 ist ein Verfahren zur dynamischen Zuordnung von Funkübertragungsressourcen bekannt. Dabei werden von einer so genannten "communication unit" Funkübertragungsressourcen von einem zentralen "controller" angefordert. Stehen diese zur Verfügung, erfolgt eine Zuordnung durch den "controller" zu dieser "unit", die nachfolgend ihre Übertragung durchführt. Seitens des "controllers" werden die einzelnen Übertragungen überwacht und ein so genannter "system grade" verschiedener Dienste bestimmt. Basierend auf dem jeweiligen "system grade" erfolgt eine Zuordnung einer weiteren Anzahl von Funkübertragungsressourcen.

Der Erfindung liegt daher das Problem zugrunde, ein Verfahren zur Datenübertragung in einem Funkkommunikationssystem anzugeben, bei dem die Dienstgüte der Teilnehmer besser berücksichtigt wird.

Dieses Problem wird gelöst durch ein Verfahren gemäß Anspruch 1. Weitere Ausgestaltungen der Erfindung gehen aus den übrigen Ansprüchen hervor.

In dem Verfahren zur Datenübertragung in einem Funkkommunikationssystem wird jedem Teilnehmer eine Dienstgüte zugeordnet. Die Dienstgüte sichert dem Teilnehmer bestimmte Eigenschaften der Übertragung zu, insbesondere eine zu erzielende Datenrate, eine maximale Übertragungs-/Verzögerungszeit und/ oder eine bestimmte Zuverlässigkeit. Die Dienstgüte kann ferner eine Unterscheidung zwischen Echtzeit-Diensten, interaktiven Diensten oder Hintergrunddiensten anhand der Traffic Class, Dienstprioritäten innerhalb einer interaktiven Dienstklasse anhand der Traffic Handling Priority, Anforderungen an die maximale Verzögerung, oder teilnehmerspezifische Daten (Subscriptions-Daten) wie die Allocation/Retention Priority etc festlegen. Aus der Dienstgüte wird eine bestimmte Priorität für die Übertragung abgeleitet. Zum Aufbau einer neuen Verbindung für einen Teilnehmer wird aufgrund der für den Teilnehmer zu erzielenden Datenrate, die mit der Dienstgüte verknüpft ist und der Funkverhältnisse eine für die Datenübertragung über eine Schnittstelle des Funkkommunikationssystems erforderliche Anzahl von Kanalelementen bestimmt. Dadurch wird berücksichtigt, dass die Funkverhältnisse einen direkten Einfluss auf das zu verwendende Kodierschema und die Blockfehlerrate haben.

Für Dienste mit Echtzeitanforderungen erfolgt die Berechnung der erforderlichen Anzahl Kanalelemente anhand einer für den Dienst garantierten Datenrate. Für Dienste ohne konkrete Anforderung einer bestimmten Datenrate, wie beispielsweise für interaktive Dienste oder Hintergrunddienste, werden vom Netz vorgegebene Datenraten verwendet. Diese richten sich beipielsweise nach der maximalen Datenrate, die vom Netz für eine Verbindung bereit gestellt werden kann oder vom Endgerät empfangen und verarbeitet werden kann oder einem Anteil davon. Eine weitere Möglichkeit besteht in der netzseitigen Zuordnung bestimmter Datenraten, die auf bestimmten Voreinstellungen beruhen und für unterschiedliche Dienstgüte-Anforderungen unterschiedlich sein können. Diese vom Netz vorgegebenen Datenraten werden als Richtwert verwendet, wenn die Verkehrslast in der Zelle so hoch ist, dass nicht allen Teilnehmern gleichzeitig die maximale Datenrate zugewiesen werden kann. Dieser Richtwert für Dienste mit Nicht-Echtzeit-Anforderungen beziehungsweise die garantierte Datenrate für Echtzeit-Anforderungen werden als die zu "erzielende Datenrate" bezeichnet.

Sind genügend freie Kanalelemente verfügbar, so wird den Teilnehmern die maximal anwendbare Datenrate zugeteilt. Sind die verfügbaren Kanalelemente nicht ausreichend, um die maximale Datenrate zuzuweisen, so wird für Nicht-Echtzeit-Anwendungen in einem ersten Schritt die zu erzielende Datenrate angestrebt. Hierbei wird eine Reduktion der maximalen Datenrate primär für Teilnehmer mit geringer Dienstgüte-Anforderung durchgeführt, während höhere Datenraten Teilnehmern mit höherer Dienstgüte zugeteilt werden. Auch eine weitere Reduzierung der Datenrate bestehender Dienste durch neu hinzukommende Dienste unterhalb der zu erzielenden Datenrate wird primär für Dienste niedriger Dienstgüte-Anforderungen angestrebt, während Diensten mit höheren Dienstgüte-Anforderungen eine entsprechend höhere Datenrate zugeteilt wird.

Die erforderliche Anzahl von Kanalelementen kann eine gebrochene Zahl sein. Sie ist ein Maß für die für die Übertragung erforderliche Übertragungskapazität.

Es wird überprüft, ob die erforderliche Anzahl von Kanalelementen zur Verfügung steht. Ist dieses der Fall, werden der Verbindung die Kanalelemente zugewiesen und die Verbindung wird aufgebaut.

Steht die erforderliche Anzahl von Kanalelementen nicht zur Verfügung, wird geprüft, ob es mindestens eine Verbindung eines Teilnehmers gibt, dem eine geringere Dienstgüte zugeordnet ist als dem Teilnehmer der neuen Verbindung. Ist dies der Fall, so wird dieser bestehenden Verbindung geringerer Dienstgüte die Anzahl der zugewiesenen Kanalelemente reduziert. Dabei wird ein vorgegebener Wert der Anzahl der zugewiesenen Kanalelemente nicht unterschritten. Dieser vorgegebene Wert wird vorzugsweise durch Multiplikation mit einem Faktor kleiner 1 aus der aufgrund der zu erzielenden Datenrate und der Funkverhältnisse erforderlichen Anzahl von Kanalelementen berechnet. Die übrigen Kanalelemente werden freigegeben.

Falls die Anzahl der freigegebenen Kanalelemente mindestens der erforderlichen Anzahl für die neue Verbindung entspricht, wird die neue Verbindung aufgebaut. Falls die neue Verbindung für einen Dienst mit Echtzeit-Anforderungen aufgebaut wird und die Anzahl der freigegebenen Kanalelemente geringer als die erforderliche Anzahl von Kanalelementen für die neue Verbindung ist, wird die neue Verbindung abgewiesen. Ist die neue Verbindung für einen Dienst mit Nicht-Echtzeit-Anforderungen, wie beispielsweise für interaktive Dienste oder Hintergrunddienste, bestimmt, kann die neue Verbindung auch mit einer geringeren Anzahl als der erforderlichen Anzahl Kanalelementen aufgebaut werden. Im Netz kann festgelegt werden, bis zu welchem Anteil der erforderlichen Anzahl Kanalelemente eine Verbindung aufgebaut wird.

Der Erfindung liegt der Gedanke zugrunde, dass Verbindungen von Teilnehmern höherer Dienstgüte bevorzugt behandelt werden. Beim Auftreten eines Engpasses wird die Anzahl der Kanalelemente, die einem Teilnehmer geringerer Dienstgüte zugewiesen sind, reduziert, um eine Verbindung für einen Teilnehmer höherer Dienstgüte zu ermöglichen. Dieser Grundgedanke wird vorzugsweise nicht nur für den Verbindungsaufbau, sondern auch während des Betriebes angewandt. Dies bedeutet: Verschlechtern sich die Funkverbindungen für eine Verbindung hoher Dienstgüte, so werden Verbindungen mit geringerer Dienstgüte in ihrem Anteil an Kanalelementen reduziert und diese Verbindungen höherer Dienstgüte zur Verfügung gestellt, um die zu erzielende Datenrate beziehungsweise maximale Übertragungs-/Verzögerungszeiten für Verbindungen mit höherer Dienstgüte aufrecht zu erhalten.

Das Verfahren ermöglicht, dass eine gewollte Reduzierung der Ubertragungsressourcen durch das Netz bewusst bei dem Dienst der geringsten Dienstgüte-Anforderung beginnt und bei zunehmender Last auf Dienste mit höheren Dienstgüte-Anforderungen ausgedehnt wird. Zudem wird in diesem Verfahren nicht nur eine lokale Optimierung pro Kanalelement durchgeführt, sondern eine globale Zuweisung der im Pool verfügbaren Kanalelemente durchgeführt, die auch eine Umsortierung der Ressourcenanteile über mehrere Kanalelemente hinweg zulässt.

Es liegt im Rahmen der Erfindung, dass ein Kanalelement durch einen Zeitschlitz auf einem Träger realisiert ist. Ein Träger wird beispielsweise durch eine Trägerfrequenz realisiert.

Es liegt im Rahmen der Erfindung, einer Verbindung Kanalelemente zuzuweisen, die auf mindestens zwei Träger verteilt sind. Dadurch wird ein Verbindungsaufbau auch dann ermöglicht, wenn die erforderliche Anzahl an Kanalelementen auf ein und demselben Träger nicht verfügbar ist.

Falls bei einer geringen Auslastung des Funkkommunikationssystems beim Aufbau der neuen Verbindung in dem Funkkommunikationssystem eine größere Anzahl an Kanalelementen zur Verfügung steht, als es für den Aufbau der neuen Verbindung gamäß der zu erzielenden Datenrate erforderlich ist, werden der neuen Verbindung zusätzliche Kanalelemente zugewiesen, sofern sie davon profitieren kann. Damit wird dem Teilnehmer der neuen Verbindung eine größere Datenrate zur Verfügung gestellt.

In diesem Fall ist es zweckmäßig, zum Aufbau einer neuen Verbindung, für die die erforderliche Anzahl von Kanalelementen nicht zur Verfügung steht, zunächst zu prüfen, ob es bestehende Verbindungen gibt, denen eine größere Anzahl von Kanalelementen zugewiesen ist, als aufgrund der zu erzielenden Datenrate und der Funkverhältnisse für diese Verbindungen erforderlich ist. Ist dieses der Fall, so wird die Zahl der dieser Verbindungen zugewiesenen Kanalelemente auf die zu erzielende Anzahl reduziert und die zusätzlichen Kanalelemente werden freigegeben. Erst wenn allen bestehenden Verbindungen die Anzahl von Kanalelementen zugewiesen ist, die aufgrund der zu erzielenden Datenrate und der Funkverhältnisse erforderlich ist, wird, falls erforderlich, die Anzahl der einer Verbindung mit geringerer Dienstgüte zugewiesenen Kanalelemente weiter reduziert.

Um die Verwaltung der zugewiesenen Kanalelemente zu erleichtern, ist es vorteilhaft, für jeden Teilnehmer einen Datenratenparameter im Funkkommunikationssystem zu speichern, der von der aktuell zugewiesenen Anzahl von Kanalelementen und der aufgrund der zu erzielenden Datenrate und der Funkverhältnisse erforderlichen Anzahl von Kanalelementen abhängt. Als Datenratenparameter ist beispielsweise das Verhältnis aus der aktuell zugewiesenen Anzahl von Kanalelementen zu der aufgrund der zu erzielenden Datenrate und der Funkverhältnisse erforderlichen Anzahl von Kanalelementen geeignet.

Es liegt im Rahmen der Erfindung, die einem Teilnehmer zugewiesenen Kanalelemente auf eine größere Anzahl von Kanalelementen zu verteilen, als es der zugewiesenen Anzahl von Kanalelementen entspricht. Auf diese Weise können Anteile von Kanalelementen, die von anderen Teilnehmern nicht genutzt werden, auch dann einer Verbindung zugewiesen werden, wenn die Anteile kleiner sind als ein für diese Verbindung benötigtes Anteil eines Kanalelementes. Diese Vorgehensweise ist immer dann möglich, wenn das Endgerät, zu dem die Verbindung aufgebaut wird, über die entsprechende Anzahl von Kanalelementen, z. B. Zeitschlitzen, gleichzeitig senden oder empfangen kann.

Sollten bei einem Verbindungsaufbau die verfügbaren Anteile von Kanalelementen über eine größere Anzahl von Kanalelementen verteilt sind, als das zugehörige Endgerät zulässt, so ist es vorteilhaft, zunächst eine Neuzuweisung der Kanalelemente auf die bestehenden Verbindungen vorzusehen. Dabei werden die für jede der bestehenden Verbindungen zugewiesenen Kanalelemente so zusammengefasst, dass die Anzahl der Kanalelemente, über die sich die der jeweiligen Verbindung zugewiesenen Kanalelemente verteilen, minimiert wird. Dadurch werden die freigegebenen Kanalelemente ebenfalls auf eine geringere Anzahl von Kanalelementen konzentriert.

Bei einer Beendigung einer Verbindung werden die der beendeten Verbindung zugewiesenen Kanalelemente freigegeben. Anschließend können die freigegebenen Kanalelemente Verbindungen zugewiesen werden, denen eine geringere Anzahl von Kanalelementen zugewiesen ist als es der aufgrund der zu erzielenden Datenrate und der Funkverhältnisse erforderlichen Anzahl von Kanalelementen entspricht. Falls in dem Funkkommunikationssystem der Datenratenparameter gespeichert wird, kann dieser zur Auswahl der Verbindungen verwendet werden, denen Kanalelemente zugewiesen werden.

Sind bei der Beendigung einer Verbindung allen übrigen bestehenden Verbindungen mindestens die aufgrund der zu erzielenden Datenrate und der Funkverhältnisse erforderliche Anzahl von Kanalelementen zugewiesen, so werden die bei der Beendigung der Verbindung freigegebenen Kanalelemente zumindest teilweise einer bestehenden Verbindung zugewiesen. Vorzugsweise werden dabei zuerst der Verbindung des Teilnehmers mit der höchsten Dienstgüte zusätzliche Kanalelemente zugewiesen. Diese zusätzliche Zuweisung kann bis zum Erreichen einer maximalen Datenrate durchgeführt werden, die für die Übertragung möglich ist. Die maximale Datenrate kann durch eine zusätzliche Verbindung der Mobilstation zu einem weitern Endgerät beispielsweise zu einem externen Datensichtgerät geringer ausfallen kann als die eigentliche maximale Datenrate der Mobilstation alleine. Hierzu kann beispielsweise eine Infrarot-Funkverbindung zwischen Mobilstation und Datensichtgerät zu einer Reduzierung der möglichen Datenrate führen.

Ändern sich die Funkverhältnisse für eine Verbindung, so wird die aufgrund der zu erzielenden Datenrate und der geänderten Funkverhältnisse erforderliche Anzahl von Kanalelementen für diese Verbindung neu bestimmt. Falls die Anzahl der zugewiesenen Kanalelemente größer ist als die neu bestimmte erforderliche Anzahl von Kanalelementen, werden die überzähligen Kanalelemente freigegeben.

Ist die Anzahl der zugewiesenen Kanalelemente kleiner als die neu bestimmte erforderliche Anzahl von Kanalelementen und gibt es eine Verbindung eines Teilnehmers mit einer geringeren Dienstgüte, als sie dem Teilnehmer der Verbindung mit den geänderten Funkverhältnissen zugeordnet ist, so wird für die Verbindung des Teilnehmers mit der geringeren Dienstgüte die Anzahl der zugewiesenen Kanalelemente unter die aufgrund der zu erzielenden Datenrate und der Funkverhältnisse erforderliche Anzahl um einen vorgegebenen Faktor reduziert und es werden die übrigen Kanalelemente freigegeben. Die freigegebenen Kanalelemente werden dann der Verbindung mit den geänderten Funkverhältnissen zugeordnet.

Um bei einer großen Verkehrslast alle Verbindungen gleichmäßig zu bedienen, ist es vorteilhaft, die Reduktion der Anzahl der zugewiesenen Kanalelemente unter die erforderliche Anzahl Kanalelemente in zwei Schritten vorzunehmen. Dabei werden zunächst sukzessive allen Verbindungen von Teilnehmern mit einer geringeren Dienstgüte, als sie dem Teilnehmer der betrachteten Verbindung zugeordnet ist, die Anzahl der zugewiesenen Kanalelemente um einen ersten Faktor reduziert. Anschließend wird sukzessive allen Verbindungen von Teilnehmern mit einer geringeren Dienstgüte, als sie dem Teilnehmer der betrachteten Verbindung zugeordnet ist, die Anzahl der zugewiesenen Kanalelemente um einen zweiten Faktor reduziert. Es liegt im Rahmen der Erfindung den ersten Faktor zwischen 0,4 und 0,6 und den zweiten Faktor zwischen 0,1 und 0,3 festzusetzen.

Es liegt im Rahmen der Erfindung, die Dienstgüte anhand der Parameter MS multislot class und/oder radio priority und/oder service precedence und/oder delay class und/oder peak throughput class und/oder mean throughput class und/oder traffic class und/oder reliability class und/oder maximum bitrate und/oder guaranteed bitrate und/oder delivery order of erroneous SDU und/oder maximum SDU size und/oder SDU error rate und/oder residual bit error ratio und/oder transfer delay und/oder traffic handling priority und/oder allocation/retention priority zu unterscheiden.

Die Zuweisung eines Anteils eines Kanalelementes ist gleichbedeutend mit der Tatsache, dass über dieses Kanalelement mindestens zwei Verbindungen im Multiplexverfahren übertragen werden können, wobei der jeweiligen Verbindung der entsprechende Anteil der Übertragungskapazität des Kanalelementes zur Verfügung gestellt wird.

Vorzugsweise wird zur Steuerung der Kanalelementzuweisung eine Matrix verwendet, deren Spalten den Kanalelementen eines Kanals zugeordnet sind und deren Zeilen den Verbindungen zugeordnet sind. Dabei geben die Matrixelemente jeweils den Anteil des jeweiligen Kanalelementes an, der der zugehörigen Verbindung zugewiesen ist.

Die Spaltenvektoren dieser Matrix können zur Steuerung der Datenübertragung in dem jeweiligen Kanalelement verwendet werden. Anhand der Werte kann das Multiplexen auf das entsprechende Kanalelement gesteuert werden.

Ist n Teilnehmern jeweils ein Anteil $v_i$, i = 1...n eines Kanalelementes j zugewiesen, wobei der Anteil $v_i$ zu Beginn der Übertragung gleich ein Anfangsanteil $p_i$ gesetzt wird, so erfolgt die Steuerung der Datenübertragung in dem Kanalelement j vorzugsweise dadurch, dass das Kanalelement j zur Datenübertragung jeweils demjenigen Teilnehmer k zugewiesen wird, dem der größte Anteil $v_k$ zugewiesen ist. Mit anderen Worten gilt für den Teilnehmer k: $v_k > v_i$ für alle $i \neq k$. Darauf wird der Anteil $v_k$ des Teilnehmers k um eins verringert und auf die Anteile aller Teilnehmer i jeweils der Startwert des eigenen Anteils $p_i$ dazu addiert. Bei der nächsten Zuweisung des Kanalelementes j wird nun unter diesen geänderten Anteilen derjenige Teilnehmer bestimmt, dessen Anteil am Größten ist. Diesem wird das Kanalelement j zur Datenübertragung zugewiesen. Auf diese Weise wird erreicht, dass die Abweichung zwischen der relativen Anzahl der für einen bestimmten Dienst übertragenen Datenblöcke und dessen vorgesehender Anteil an der Übertragungskapazität des Kanalelementes j minimiert wird.

Im Folgenden wird die Erfindung anhand von Ausführungsbeispielen, die in den Figuren dargestellt sind, näher erläutert. In diesen Beipielen wird als Qualitätsindikator die Daten-Durchsatzrate verwendet. Andere Möglichkeiten bieten beipielsweise die Relationen der Dienstqualität zu der maximalen Übertragungs-/Verzögerungszeit, Reliability Class oder Error Ratio.

Figur 1 zeigt einen Ausschnitt aus der Architektur eines Funkkommunikationssystems.

Figur 2 zeigt ein Ablaufdiagramm für einen Verbindungsaufbau.

Figur 3 zeigt ein Ablaufdiagramm für einen Verbindungsabbau.

Figur 4 zeigt ein Ablaufdiagramm für eine Veränderung der Kanalelementzuweisung nach einer Verbesserung der Funkbedingungen für einen Teilnehmer.

Figur 5 zeigt ein Ablaufdiagramm für eine Änderung der Kanalzuweisung nach einer Verschlechterung der Funkbedingungen für einen Teilnehmer.

Ein Funkkommunikationssystem (siehe Figur 1) umfasst eine Vielzahl von Basisstationen BTS, über die eine Funkverbindung zu einer Mobilstation MS hergestellt werden kann. Die Basisstation BTS ist über eine $A_{bis}$ Schnittstelle mit einer Basisstationssteuerung BSC verbunden. Die Basisstationssteuerung BSC ist über eine $A_{sub}$-Schnittstelle mit einer Transkodier- und Ratenadaptionseinheit TRAU verbunden, die über eine A-Schnittstelle mit einer Mobilvermittlungsstelle verbunden ist. Die Mobilvermittlungsstelle MSC stellt die Verbindung zu anderen Netzen, zum Beispiel zum Festnetz dar. Über die $A_{sub}$-Schnittstelle und die A-Schnittstelle werden leitungsvermittelte Daten übertragen.

Im Basisstations-Subsystem BSS gibt es eine Paketdatensteuereinheit PCU, die beispielsweise an der Basisstationssteuerung BSC angebracht sein kann. In diesem Fall weist die BSC zur Vermittlung von paketvermittelten Daten die Paketdatensteuereinheit PCU auf, die einerseits über die $A_{bis}$-Schnittstelle mit der Basisstation BTS verbunden ist und, die andererseits zum Beispiel über eine $G_b$-Schnittstelle mit einem Paketdatendienstknoten SGSN verbunden ist, über den eine Verbindung zu einem Paketdatennetz, zum Beispiel dem IP-Netz, realisiert wird.

Die Basisstation BTS umfasst mehrere Sende/Empfangseinheiten CU und eine zentrale Einheit CORE. Über die $A_{bis}$-Schnittstelle übertragene Daten werden von der zentralen Einheit CORE der jeweils betreffenden Sende/Empfangseinheit CU zugeleitet.

In dem Mobilfunksystem werden unterschiedliche Kanäle durch unterschiedliche Trägerfrequenzen unterschieden. Die Sende/Empfangseinheiten CU einer Basisstation BTS unterscheiden sich in der jeweils gesendeten beziehungsweise empfangenden Trägerfrequenz. Ein Kanal wird durch verschiedene Zeitschlitze in Kanalelemente unterteilt. Es wird ein Zeitrahmen, der acht Zeitschlitze umfasst, definiert. Ein Kanalelement wird durch einen bestimmten Zeitschlitz in einem Zeitrahmen der jeweiligen Sende/Empfangseinheit CU definiert.

Die paketvermittelte Datenübertragung kann für mehrere Verbindungen im Zeitmultiplex über ein- und dasselbe physikalische Kanalelement erfolgen. Einer Verbindung kann dabei auch mehr als ein Kanalelement gleichzeitig zugewiesen werden. Die Zuweisung der einzelnen Verbindungen auf ein Kanalelement erfolgt in der Paketdatensteuerung PCU über eine Warteschlangenverwaltung W und in der Basisstation BTS über die zentrale Einheit CORE.

Nach einer Anfrage zum Verbindungsaufbau für einen Teilnehmer k wird zunächst die Anzahl der benötigten Kanalelemente für den Teilnehmer k berechnet (siehe Figur 2). Dabei wird die für den Teilnehmer k aufgrund der zugewiesenen Dienstgüte zu erzielende Datenrate berücksichtigt. Ferner werden die gegebenen Funkverhältnisse berücksichtigt. Die Berechnung erfolgt anhand der folgenden Formel:

$$RT_k = \sum_{i=1}^{N} p_{ik} \cdot CS_Throughput_k \cdot (1 - block_error_prob_k)$$

Dabei ist

N die Anzahl der möglichen Kanalelemente,

$RT_k$ die für den Teilnehmer k zu erzielende Datenrate,

$p_{ik}$ der Anteil an der Übertragungskapazität auf dem Kanalelement i für den Teilnehmer k,

$CS_Throughput_k$ die maximale theoretische Nutzdatenrate für den Teilnehmer k auf Grund des gewählten GPRS/EDGE Kodierschemas und

$block_error_prob_k$ die Wiederholungsrate für den Teilnehmer k auf Grund der Blockfehlerwahrscheinlichkeit, die von den Funkverhältnissen abhängt.

Für jedes Kanalelement i gilt

$$\sum_k p_{ik} \leq 1 \quad \forall i \in \{1..N\}$$

Beim Verbindungsaufbau wird geprüft, ob ausreichend viele Kanalelemente frei sind, damit der neuen Verbindung die berechnete Anzahl der Kanalelemente zugewiesen werden kann. Sind nicht ausreichend viele Kanalelemente frei, so wird überprüft, ob es Teilnehmer gibt, denen eine geringere Dienstgüte zugewiesen ist als dem Teilnehmer der neu aufzubauenden Verbindung, die Kanalelemente abgeben könnten. Um eine neue Verbindung zu ermöglichen, kann die Anzahl der Kanalelemente, die einer Verbindung geringerer Dienstgüte zugewiesen ist und die keine Echtzeit-Bedingungen zu erfüllen hat, um einen Faktor verringert werden, beispielsweise bis zu 0,1 der zu erzielenden Datenrate. Gibt es derartige Teilnehmer geringerer Dienstgüte, so werden die entsprechenden Kanalelemente freigegeben. Für den Teilnehmer j geringerer Dienstgüte wird ein Datenratenparameter $DF_j$ berechnet und gespeichert, der gleich dem Quotienten aus der nun tatsächlichen Anzahl zugewiesener Kanalelemente und der auf Grund der Dienstgüte und der Funkverhältnisse erforderlichen Anzahl Kanalelementen ist.

Nachfolgend wird erneut geprüft, ob ausreichend Kanalelemente frei sind, um die neue Verbindung aufzubauen.

Gibt es keinen Teilnehmer j geringerer Dienstgüte, der Kanalelemente abgeben könnte, so wird für Verbindungen mit Echtzeit-Bedingungen die Anfrage zum Verbindungsaufbau abgewiesen, für Verbindungen ohne Echtzeit-Bedingungen bei Unterschreiten einer Mindestanzahl an Kanalelementen die Anfrage zum Verbindungsaufbau abgewiesen.

Ist die Kapazität des Funkkommunikationssystems dagegen so groß, dass mehr Kanalelemente frei sind, als es der Anzahl der benötigten Kanalelemente für die neue Verbindung entspricht, so können der neuen Verbindung auch eine größere Anzahl an Kanalelementen zugewiesen werden, sofern diese davon profitieren kann. Auch in diesem Fall wird ein Datenratenparameter $DF_k$ berechnet und gespeichert. Der Datenratenparameter $DF_k$ ist in diesem Fall größer 1. Die maximal mögliche Anzahl Kanalelemente, die dem Teilnehmer k zugewiesen werden kann, wird durch die Eigenschaft der Mobilstation begrenzt, zu der die Verbindung aufgebaut wird. Es können maximal soviele durch unterschiedliche Zeitschlitze realisierte Kanalelemente zugewiesen werden, wie es in der Mobilstation Zeitschlitze gibt, auf denen gleichzeitig empfangen beziehungsweise gesendet werden kann. Weitere Einschränkungen können beispielweise durch die Prozessorleistung gegeben sein. Hierbei kann die Mobilstation dem Netz beispielsweise mitteilen, dass sie zwar auf n Zeitschlitzen Daten empfangen kann, dass sie aber nicht n mal die Datenrate des höchsten Kodierschemas verarbeiten kann. Eine weitere Einschränkung kann durch die Verbindung zu zusätzlichen Geräten auftreten, mit denen die Mobilstation verbunden ist. Dies wird dem Netz über den Parameter peak throughput rate bzw. maximum bit rate signalisiert.

Auf diese Weise kann in der Verbindung eine höhere Datenrate erzielt werden, als es der zu erzielenden Dienstgüte entspricht.

Wird einer Verbindung das Kodierschema CS-2, das einer Datenrate von 12 kbit/s entspricht, zugewiesen und sei die Blockfehlerwahrscheinlichkeit 0,1 und die zu erzielende Datenrate 22 kbit/s, so gilt für die Summe der Anteilsfaktoren $p_{ik}$

$$\sum_{i=1}^{N} p_{ik} = \frac{22kbit/s}{12kbit/s \cdot (1-0.1)} = 2.037 \ .$$

Es ergibt sich somit für die Anzahl der benötigten Kanalelemente 2,037. Da die Anteilsfaktoren $p_{ik}$ für ein Kanalelement i in Summe maximal

$$\sum_{k} p_{ik} = 1$$

ergeben, muss die Übertragungskapazität für die Verbindung auf verschiedenen Kanalelementen zugewiesen werden. Dabei gibt es verschiedene Möglichkeiten. Es können beispielsweise das Kanalelement 1 und das Kanalelement 2 vollständig der Verbindung zugewiesen werden und auf dem Kanalelement 3 ein Anteil von 0,037. In diesem Fall gilt

$$(p_{1k}=1) + (p_{2k}=1) + (p_{3k}=0.037).$$

Alternativ kann das Kanalelement 1 vollständig und von den Kanalelementen 2 und 3 Anteile von jeweils 0,5 beziehungsweise 0,537 zugewiesen werden. In diesem Fall gilt

$$(p_{1k}=1) + (p_{2k}=0.5) + (p_{3k}=0.537).$$

Eine weitere Möglichkeit besteht darin, auf dem Kanalelement 1 den Anteil 0,5, auf dem Kanalelement 2 den Anteil 0,5, auf dem Kanalelement 3 den Anteil 0,7, auf dem Kanalelement 4 den Anteil 0,3 und auf dem Kanalelement 5 den Anteil 0,037 zuzuweisen. In diesem Fall gilt

$$(p_{1x}=0.5) + (p_{2k}=0.5) + (p_{3k}=0.7) + (p_{4k}=0.3) + (p_{5k}=0.037) \text{ etc.}$$

Weitere Alternativen sind denkbar.

In dem ersten und zweiten Beispiel kann die Verbindung zu einer Mobilstation aufgebaut werden, die Senden beziehungsweise Empfangen über drei Zeitschlitze erlaubt. Im dritten Beispiel muss die Verbindung zu einer Mobilstation aufgebaut werden, bei der Senden beziehungsweise Empfangen auf mindestens fünf Zeitschlitzen möglich ist.

Die Summe der Anteilsfaktoren $p_{ik}$ bleibt solange konstant, wie sich die Funkverhältnisse nicht ändern. Bei einer Änderung der Funkverhältnisse, die eine Änderung des Kodierschemas bedingt, oder die eine Änderung der Blockfehlerrate bewirkt, muss die Summe der Anteilsfaktoren $p_{ik}$ neu berechnet werden.

Werden mehrere Teilnehmer k auf ein Kanalelement gemultiplext, so gilt die folgende Betrachtung: $A_k$ sei die

konstante Datenrate des Teilnehmers k während eines beliebigen Zeitintervalls, in dem die Funkparameter konstant sind. Dann gilt:

$$A_k = CS_Throughput_k \cdot (1\text{-}block_error_prob_k).$$

Für die mittlere Datenrate $RT_k$ des Teilnehmers k gilt:

$$RT_k = \sum_{i=1}^{N} p_{ik} \cdot A_k \ .$$

Werden n Teilnehmer gleichzeitig auf das eine Kanalelement gemultiplext, so gilt

$$RT_1 = \sum_i p_{i1} \cdot A_1$$
$$RT_2 = \sum_i p_{i2} \cdot A_2$$
$$RT_3 = \sum_i p_{i3} \cdot A_3$$
$$\ldots$$
$$RT_n = \sum_i p_{in} \cdot A_n$$

In einem GSM-System kann dabei die Anzahl der Teilnehmer n maximal acht sein für Verbindungen von den Mobilstationen zur BTS (Uplink) und maximal 16 für entgegengesetzte Richtung von der BTS zu den Mobilstationen (Downlink).

Folgende Bedingung muss dann erfüllt sein: Die Anzahl der einem Teilnehmer zugewiesenen Kanalelemente darf nicht höher sein, als die maximale Anzahl von Zeitschlitzen, über die die Mobilstation, zu der die Verbindung aufgebaut ist, senden beziehungsweise empfangen kann. Eine weitere Einschränkung besteht in der maximalen Datenrate, die beipielsweise durch die zusätzliche Verbindung der Mobilstation zu einem externen Datensichtgerät geringer ausfallen kann als die eigentliche maximale Daterate der Mobilstation alleine. Hierzu kann beipielsweise eine Infrarot-Funkverbindung zwischen Mobilstation und Datensichtgerät zu einer Reduzierung der möglichen Datenrate führen. Ferner darf die Anzahl der Teilnehmer, die auf ein Kanalelement gemultiplext werden, nicht größer sein als eine Schwelle, die für jede Mobilstation auch bei einer hohen Verkehrsauslastung eine vernünftige Datenrate sicherstellt. Die Summe der Elemente $p_{ik}$ für ein Kanalelement i über k = 1...n ist auf eins beschränkt, da die Verkehrsauslastung auf einem Kanalelement 100 % nicht überschreiten kann. Die Betrachtung muss für Kanalelemente, die über unterschiedliche Sende/Empfangseinheiten bedient werden, unabhängig voneinander durchgeführt werden.

Wird die Verbindung eines Teilnehmers beendet, so werden die diesen Teilnehmer zugewiesenen Kanalelemente freigegeben (siehe Figur 3). Anschließend wird geprüft, ob es Verbindungen gibt mit einem Datenratenparameter DF kleiner 1. Ist dieses der Fall, so wird der Verbindung mit der größten Dienstgüte, die den Datenratenparameter DF kleiner 1 aufweist, zusätzliche Kanalelemente zugewiesen. Dabei wird die maximal mögliche Anzahl Kanalelemente auf Grund der zugehörigen Mobilstation berücksichtigt.

Gibt es keine Verbindungen mit einem Datenratenparameter DF kleiner 1, so wird überprüft, ob es Verbindungen mit einem Datenratenparameter DF gleich 1 gibt, die von der Zuweisung zusätzlicher Kanalelemente.oder Erhöhung der jeweiligen Anteile profitieren können. Ist dieses der Fall, so werden der Verbindung mit der größten Dienstgüte zusätzlich Kanalelemente zugewiesen. Auf diese Weise wird einzelnen Verbindungen eine höhere Datenrate ermöglicht, als auf Grund der zu erzielenden Datenrate vorgesehen.

Ändern sich die Funkparameter für einen Teilnehmer, so kann eine Anpassung der dem Teilnehmer zugewiesenen Anzahl Kanalelemente erforderlich werden.

Verbessern sich die Funkbedingungen für einen Teilnehmer (siehe Figur 4), so wird die für den Teilnehmer erforderliche Anzahl an Kanalelementen auf Grund der geänderten Funkbedingungen neu berechnet. In der Regel wird auf Grund der Verbesserungen der Funkbedingungen die neu berechnete Anzahl an Kanalelementen kleiner sein als die bisher gültige Anzahl. Es werden daher die überflüssigen Kanalelemente freigegeben.

Anschließend wird wie beim Verbindungsabbau eines Teilnehmers, geprüft, ob es eine Verbindung gibt, deren Datenratenparameter DF kleiner 1 ist, das heisst, der weniger Kanalelemente zugewiesen sind, als auf Grund der herrschenden Funkbedingungen vorgesehen. Ist dieses der Fall, so werden der Verbindung mit dem Datenratenparameter DF kleiner 1 mit der größten Dienstgüte zusätzliche Kanalelemente zugewiesen. Ist dieses nicht der Fall, so wird geprüft, ob es Verbindungen gibt, deren Datenratenparameter DF gleich 1 ist, das heisst, denen genau die Anzahl an Kanalelementen zugewiesen ist, die auf Grund der zu erzielenden Datenrate und der herrschenden Funkbedingungen erforderlich ist. Ist dieses der Fall, so werden der Verbindung mit Datenratenparameter DF=1 mit der größten Dienstgüte zusätzliche Kanalelemente zugewiesen, sofern sie davon profitieren können. Dieser Verbindung wird somit eine größere Datenrate ermöglicht, als auf Grund der zu erzielenden Datenrate vorgesehen.

Verschlechtern sich dagegen die Funkbedingungen für einen Teilnehmer, so wird die neue Anzahl benötigter Kanalelemente auf Grund der schlechteren Funkbedingungen berechnet, die in der Regel größer ist als die Anzahl der bisher zugewiesenen Kanalelemente (siehe Figur 5). Nachfolgend wird geprüft, ob in dem Funkkommunikationssystem ausreichend Anteile von Kanalelementen frei sind, um dem betrachteten Teilnehmer die nun erforderliche Anzahl an Kanalelementen zuzuweisen. Ist dieses der Fall, so erfolgt die Zuweisung der Kanalelemente.

Ist dieses dagegen nicht der Fall, wird geprüft, ob es Teilnehmer mit einer geringeren Dienstgüte gibt, deren Anzahl an Kanalelementen um einen Faktor reduziert werden kann, so dass diese Teilnehmer Kanalelemente freigeben können. Diese Bedingung ist immer dann erfüllt, wenn dem Teilnehmer die auf Grund der für diese Verbindung zu erzielende Datenrate und der herrschenden Funkverbindungen erforderliche Anzahl an Kanalelementen oder eine größere Anzahl zugewiesen ist. Vorzugsweise wird ein minimaler Faktor definiert, unter den die Anzahl der einem Teilnehmer zugewiesenen Kanalelemente nicht reduziert werden kann. Gibt es einen solchen Teilnehmer, der Kanalelemente freigeben kann, so gibt dieser Teilnehmer geringerer Dienstgüte Kanalelemente frei, die dem Teilnehmer, dessen Funkbedingungen sich verschlechtert haben und der eine größere Dienstgüte zugewiesen bekommen hat, zugewiesen werden. Diese Vorgehensweise räumt Teilnehmern mit höherer Dienstgüte Vorrang gegenüber Teilnehmern mit geringerer Dienstgüte ein.

Gibt es keine Teilnehmer mit geringerer Dienstgüte, die Kanalelemente abgeben können, so kann beispielsweise geprüft werden, ob ein Zellwechsel für den Teilnehmer mit den verschlechterten Funkbedingungen oder für einen weiteren Teilnehmer, der in dieser Zelle vorhandene Kanalelemente belegt, in eine andere Zelle möglich ist. Ist auch dieses nicht möglich, so muss die Verbindung mit verringerter Datenrate fortgeführt werden

Werden beispielsweise zwei Teilnehmer 1 und 2 auf ein Kanalelement 3 gemultiplext, und wird den Teilnehmern auf Grund der für sie zu erzielenden Datenraten und der herrschenden Funkverbindungen ein Koeffizient $P_{31}$=0,75 und $P_{32}$=0,25 zugeordnet, so werden die Datenblöcke der Teilnehmer 1 und 2 folgendermaßen übertragen: Anfänglich gilt für den ersten Teilnehmer 1 $P_{31}$=0,75 und für den zweiten Teilnehmer 2 $P_{32}$=0,25. Es wird für die Teilnehmer jeweils ein Anteilswert $v_{3i}$ definiert, der zu Beginn der Übertragung gleich dem Koeffizienten $p_{3i}$ gesetzt wird, d.h. $v_{31}=P_{31}$=0,75 und $v_{32}=P_{32}$=0,25. Über das Kanalelement 3 wird zunächst der Datenblock desjenigen Teilnehmers übertragen, dem der größere Anteilswert $v_{3i}$ zugewiesen ist. Da $v_{31}$=0, 75>$v_{32}$=0, 25 ist, wird zunächst ein Datenblock des ersten Teilnehmers 1 übertragen. Anschließend wird der Anteilswert des ersten Teilnehmers 1, für den ein Datenblock übertragen wurde, um 1 reduziert. Das heisst, $v_{31}$=0,75-1=-0,25. Ferner werden die Anteilswerte $V_{3i}$ für alle Teilnehmer um den anfänglichen Koeffizienten $P_{3i}$ erhöht. Das heisst, V31=-0,25+0,75=0,5, $V_{32}$=0,25+0,25=0,5.

Anschließend wird der Teilnehmer mit dem höchsten Anteilswert ermittelt. Da der erste Teilnehmer 1 und der zweite Teilnehmer 2 gleiche Anteilswerte aufweisen, wird der erste Teilnehmer 1 ausgewählt. Es wird ein Datenblock des ersten Teilnehmers 1 gesendet. Nachfolgend wird wiederum der Anteilswert des ersten Teilnehmers 1 um 1 reduziert: $V_{31}$=0,5-1=-0,5. Ferner werden die Anteilswerte aller Teilnehmer um den anfänglichen Koeffizienten $P_{3i}$ erhöht. Somit ergibt sich $V_{31}$=-0,5+0,75=0,25, $V_{32}$=0,5+0,25=0,75.

Zur Übertragung des nächsten Datenblocks wird wiederum festgestellt, welcher Teilnehmer den höchsten Anteilswert $V_{3i}$ aufweist. Da $V_{32}$=0,75>$V_{31}$=0,25 ist, wird der zweite Teilnehmer 2 ausgewählt. Es wird ein Datenblock des Teilnehmers 2 übertragen. Anschließend wird der Anteilswert $V_{32}$ um 1 reduziert, das heisst, $V_{32}$=0,75-1=-0,25. Ferner werden die Anteilsfaktoren $V_{3i}$ für alle Teilnehmer um den anfänglichen Koeffizienten $p_{3i}$ erhöht: $V_{31}$=0, 25+0, 75=1, $V_{32}$=-0,25+0,25=0.

Zur Übertragung des nächsten Datenblocks wird wiederum festgestellt, welcher Teilnehmer den höchsten Anteilswert $V_{3i}$ aufweist. Da $V_{31}$=1>$V_{32}$=0 ist, wird der erste Teilnehmer 1 ausgewählt. Es wird ein Datenblock des ersten Teilnehmers 1 übertragen. Daraufhin wird der Anteilswert $V_{31}$ des ersten Teilnehmers 1 um 1 reduziert: $V_{31}$=1-1=0. Es werden alle Anteilswerte V3i um den anfänglichen Anteilswert $P_{3i}$ erhöht: $V_{31}$=0+0,75=0,75, $V_{32}$=0+0,25=0,25. Die Prozedur wird in der beschriebenen Weise fortgesetzt, solange die Koeffizienten $P_{3i}$ nicht verändert werden.

Im Falle einer Änderung der Koeffizienten $p_{ik}$ werden diese Werte neu eingelesen und die momentan gültigen Anteilswerte mit der Differenz zwischen den neuen Werten der Koeffizienten $p_{ik}$ und den vorherigen Werten aktualisiert.

Das Beispiel zeigt, dass die Übertragungskapazität des Kanalelementes 3 im Verhältnis 3:1 auf die Teilnehmer 1 und 2 verteilt wird, wie es dem Verhältnis $P_{31}$ zu $P_{32}$ entspricht. Bereits nach der Übertragung von vier Datenblöcken wird somit die angestrebte Aufteilung der Übertragungskapazität auf die beteiligten Teilnehmer erreicht.

Im Folgenden wird ein Ausführungsbeispiel der Erfindung geschildert. Es wird angenommen, dass zu Beginn eine Zelle vollständig leer ist. Pro Kanal sind maximal acht Zeitschlitze definiert, die acht Kanalelemente realisieren. Auf ein Kanalelement sollen maximal vier Teilnehmer gemultiplext werden. Wird die Anzahl der einem Teilnehmer zugewiesenen Kanalelemente unter die auf Grund der Funkbedingungen und der zugesagten Dienstgüte zu erzielende Anzahl reduziert, so erfolgt diese Reduktion in zwei Schritten: In einem ersten Schritt wird ein erster Reduktionsfaktor RF1=0,5 und in einem zweiten Schritt ein zweiter Reduktionsfaktor RF2=0,1 nicht unterschritten.

Es soll eine Verbindung für einen ersten Teilnehmer 1 aufgebaut werden, der folgende Anforderungen hat: Die Verbindung wird zu einer GPRS Mobilstation, die über vier Zeitschlitze gleichzeitig senden beziehungsweise empfangen kann, aufgebaut. Das Anfangskodierschema ist CS-2. Die zu erzielende Datenrate beträgt 22kbit/s. Die angenommene Blockfehlerwahrscheinlichkeit beträgt 10%. Damit ergibt sich für die Summe der Anteile $p_{i1}$

$$\sum_{i=1}^{N} p_{i1} = \frac{22kbit/s}{12kbit/s \cdot (1-0.1)} = 2.037 \ .$$

Das heisst, die Anzahl der auf Grund der zu erzielenden Datenrate und der Funkbedingungen erforderlichen Kanalelemente beträgt 2,037. Die Anzahl der verfügbaren Kanalelemente ist größer als diese erforderliche Anzahl. Daher werden dem ersten Teilnehmer 1 die maximale Anzahl an Kanalelementen zugewiesen, das heisst, vier Kanalelemente entsprechend der Fähigkeit der Mobilstation, auf vier Zeitschlitzen gleichzeitig senden beziehungsweise empfangen zu können. Daraus ergibt sich für die Matrix $p_{ik}$:

$$p_{i1} = (\ 1\ \ 1\ \ 0.037+(0.963)\ \ (1)\ \ 0\ \ 0\ \ 0\ \ 0).$$

Für den ersten Teilnehmer 1 wird der Datenratenparameter $DF_1$ als Verhältnis aus zugewiesener Anzahl Kanalelemente zu erzielender Anzahl Kanalelemente berechnet: $DF_1$=4/2,037=1,96.

Es wird eine Verbindung für einen zweiten Teilnehmer 2 aufgebaut, der genau wie der erste Teilnehmer 1 charakterisiert ist, der jedoch eine geringere Dienstgütepriorität als der erste Teilnehmer 1 aufweist. Da ausreichend Ressourcen vorhanden sind, werden dem zweiten Teilnehmer 2 vier Kanalelemente zugewiesen. Dadurch verändert sich die Matrix $p_{ik}$ folgendermaßen:

$$p_{ik} = \begin{pmatrix} 1 & 1 & 0.037+(0.963) & (1) & 0 & 0 & 0 & 0 \\ 0 & 0 & 0 & 0 & 1 & 1 & 0.037+(0.963) & (1) \end{pmatrix}.$$

Auch für den zweiten Teilnehmer 2 wird der Datenratenparameter $DF_2$ berechnet. Es gilt $DF_2$=4/2, 037=1, 96.

Für einen dritten Teilnehmer 3 soll eine Verbindung aufgebaut werden. Der dritte Teilnehmer 3 hat eine Dienstgütepriorität, die höher als diejenige des zweiten Teilnehmers 2, aber geringer als diejenige des ersten Teilnehmers 1 ist. Die Dienstgüteprioritäten werden in der Paketdatensteuereinheit in einer Prioritätenliste für die jeweilige Zelle gespeichert. Weitere Eigenschaften des Teilnehmers 3 sind: GPRS Mobilstation, die auf vier Zeitschlitzen senden beziehungsweise empfangen kann, Anfangskodierschema CS-1, zu erzielende Datenrate 22kbit/s und Blockfehlerwahrscheinlichkeit von 10%. Damit ergibt sich für die erforderliche Anzahl Kanalelemente

$$\sum_{i=1}^{N} p_{i3} = \frac{22kbit/s}{8kbit/s \cdot (1-0.1)} = 3.056 \ .$$

Das heisst für den Teilnehmer 3 werden 3,056 Kanalelemente benötigt. Da jedoch alle Paketdatenkanäle der Zelle belegt sind, wird folgendermaßen vorgegangen: Für den Teilnehmer 2 mit der geringsten Dienstgütepriorität werden die zugewiesenen Kanalelemente auf die auf Grund der Dienstgüte und der Funkbedingungen zu erzielende Anzahl reduziert, das heisst, der Datenratenparameter $DF_2$=1,96 wird auf $DF_2$=1 reduziert. Damit ergibt sich für die Matrix $p_{ik}$

$$p_{ik} = \begin{pmatrix} 1 & 1 & 0.037 + (0.963) & (1) & 0 & 0 & 0 & 0 \\ 0 & 0 & 0 & 0 & 1 & 1 & 0.037 & 0 \end{pmatrix}.$$

Die Anzahl der auf diese Weise freigegebenen Kanalelemente in der Zelle beträgt

$$\sum_{i=1}^{8} q_{ik} = 1.963 \text{ .}$$

Da die Anzahl der für den Teilnehmer 3 erforderlichen Kanalelemente größer 1,963 ist, müssen weitere 1,093 Kanalelemente freigegeben werden. Für den Teilnehmer ist der Datenratenparameter $DF_1$=1,96, das heisst größer 1. Somit wird die Zahl, der dem ersten Teilnehmer 1 zugewiesenen Kanalelemente um 1,093 reduziert. Es ergibt sich somit als Summe der $p_{il}$=4-1,093=2,907. Der Datenratenparameter $DF_1$ des ersten Teilnehmers 1 wird neu berechnet zu $DF_1$=2,907/2,037=1,427. Somit sind dem Teilnehmer 1 immer noch eine größere Anzahl an Kanalelementen zugewiesen, als auf Grund der Dienstgüte und der Funkbedingungen zu erzielen wären. Es ergibt sich folgende $p_{ik}$-Matrix:

$$p_{ik} = \begin{pmatrix} 1 & 1 & 0.037 + (0.870) & 0 & 0 & 0 & 0 & 0 \\ 0 & 0 & 0 & 0 & 1 & 1 & 0.037 & 0 \end{pmatrix}.$$

In dem System sind nun 3,056 Kanalelemente frei, die der neuen Verbindung des dritten Teilnehmers 3 zugewiesen werden können. Somit verändert sich die $p_{ik}$-Matrix zu

$$p_{ik} = \begin{pmatrix} 1 & 1 & 0.037 + (0.870) & 0 & 0 & 0 & 0 & 0 \\ 0 & 0 & 0 & 0 & 1 & 1 & 0.037 & 0 \\ 0 & 0 & 0.093 & 1 & 0 & 0 & 0.963 & 1 \end{pmatrix}.$$

Für Systeme, die eine Zuweisung benachbarter Kanalelemente erfordern, wird diese $p_{ik}$ Matrix neu aufgebaut und die Matrixelemente so gefüllt, dass den Mobilstationen jeweils benachbarte Zeilenelemente zugewiesen werden. In diesem Beispiel bleibt die erste Zeile unverändert, die Matrixelemente der zweiten Zeile werden um eine Spalte nach rechts verschoben und das Matrixelement mit dem Wert 0.037 wird mit der ersten 1 vertauscht. In der dritten Matrixzeile werden die Elemente der Spalten 7 und 8 auf die Spalten 6 (Wert 0.963) und 5 (Wert 1) verlegt. In diesem Falle ergibt sich folgende $p_{ik}$ Matrix:

$$p_{ik} = \begin{pmatrix} 1 & 1 & 0.037 + (0.870) & 0 & 0 & 0 & 0 & 0 \\ 0 & 0 & 0 & 0 & 0 & 0.037 & 1 & 1 \\ 0 & 0 & 0.093 & 1 & 1 & 0.963 & 0 & 0 \end{pmatrix}$$

Da der GSM Standard keine zusammenhängenden Kanalelemente fordert, wird im folgenden der allgemeinere Fall, basierend auf nicht zwingenderweise zusammenhängenden Kanalelemente beschrieben.

Für einen vierten Teilnehmer 4 soll eine Verbindung aufgebaut werden. Auf Grund seiner Dienstgüte ist die Priorität des vierten Teilnehmers 4 geringer als die des ersten Teilnehmers 1 aber höher als die des dritten Teilnehmers 3. Die weiteren Eigenschaften des neuen Teilnehmers 4 sind: GPRS Mobilstation, die gleichzeitig auf vier Zeitschlitzen senden beziehungsweise empfangen kann, Anfangskodierschema CS-4, zu erzielende Datenrate 44kbit/s und eine Blockfehlerwahrscheinlichkeit von 10%. Somit ergibt sich für die Summe der $p_{i4}$

$$=> \sum_{i=1}^{N} p_{i4} = \frac{44kbit/s}{20kbit/s \cdot (1-0.1)} = 2.444\ .$$

In dem System sind keine Kanalelemente frei. Somit wird die Anzahl der zugewiesenen Kanalelemente für alle Teilnehmer so angepasst, dass für alle Teilnehmer gilt: DF=1. Das bedeutet, dass der erste Teilnehmer 1, für den bis dahin gilt: $DF_1$=1,427, 0,870 Kanalelemente freigeben muss, um die auf Grund der Dienstgüte und der Funkverhältnisse zu erzielende Anzahl von 2,037 Kanalelementen zu erhalten. Dadurch ergibt sich für die Matrix $p_{ik}$

$$p_{ik} = \begin{pmatrix} 1 & 1 & 0.037 & 0 & 0 & 0 & 0 & 0 \\ 0 & 0 & 0 & 0 & 1 & 1 & 0.037 & 0 \\ 0 & 0 & 0.093 & 1 & 0 & 0 & 0.963 & 1 \end{pmatrix}.$$

Die Anzahl der freien Kanalelemente beträgt nun 0,87. Für die Verbindung des Teilnehmers 4 werden jedoch zusätzlich 2,444-0,870=1,574 Kanalelemente benötigt. Daher wird für den Teilnehmer mit der geringsten Dienstgütepriorität, das heisst dem Teilnehmer 2, die Anzahl der zugewiesenen Kanalelemente reduziert entsprechend dem Reduktionsfaktor RF1 von 0,5. Das heisst, die Anzahl der zugewiesenen Kanalelemente wird von 2,037 auf 2,037x0,5=1,019 Kanalelement reduziert. Dadurch verändert sich die $p_{ik}$-Matrix folgendermaßen:

$$p_{ik} = \begin{pmatrix} 1 & 1 & 0.037 & 0 & 0 & 0 & 0 & 0 \\ 0 & 0 & 0 & 0 & 1 & 1-(0.981) & 0.037-(0.037) & 0 \\ 0 & 0 & 0.093 & 1 & 0 & 0 & 0.963 & 1 \end{pmatrix}.$$

Dem zweiten Teilnehmer 2 sind somit nur noch Kanalelemente, die durch den fünften und sechsten Zeitschlitz realisiert sind, zugewiesen.

Die in der Zelle freien Kanalelemente befinden sich nun im sechsten und siebten Zeitschlitz. Insgesamt sind 1,888 Kanalelemente frei. Für den Aufbau der Verbindung für den vierten Teilnehmer 4 werden weitere 2,444-1,888=0,556 Kanalelemente benötigt. Daher wird nun die Anzahl der zugewiesenen Kanalelemente für den dritten Teilnehmer 3, der eine höhere Dienstgüte als der zweite Teilnehmer 2, aber eine geringere Dienstgüte als der vierte Teilnehmer 4 hat, angepasst. Der dritte Teilnehmer 3 gibt 0,556 Kanalelemente frei. Dieses ist möglich, da dem dritten Teilnehmer 3 3,056 Kanalelemente zugewiesen waren und eine Reduktion um den ersten Reduktionsfaktor RF1=0,5 maximal möglich ist. Die maximal möglich Reduktion beträgt somit 3,056x0,5=1,528 und liegt damit deutlich über den freigegebenen 0,556 Kanalelementen. Dem dritten Teilnehmer 3 sind somit weiterhin 3,056-0,556=2,5 Kanalelemente zugewiesen. Das ergibt einen Datenratenparameter $DF_3$=2,5/3,056=0,818. Damit ergibt eine $p_{ik}$-Matrix von

$$p_{ik} = \begin{pmatrix} 1 & 1 & 0.037 & 0 & 0 & 0 & 0 & 0 \\ 0 & 0 & 0 & 0 & 1 & 1-(0.981) & 0.037-(0.037) & 0 \\ 0 & 0 & 0.093-(0.093) & 1 & 0 & 0 & 0.963-(0.463) & 1 \end{pmatrix}.$$

Die Zahl der freien Kanalelemente ist nun ausreichend zum Aufbau der Verbindung für den vierten Teilnehmer 4. Somit ändert sich die Matrix $P_{ik}$ zu

$$p_{ik} = \begin{pmatrix} 1 & 1 & 0.037 & 0 & 0 & 0 & 0 & 0 \\ 0 & 0 & 0 & 0 & 1 & 1-(0.981) & 0.037-(0.037) & 0 \\ 0 & 0 & 0.093-(0.093) & 1 & 0 & 0 & 0.963-(0.463) & 1 \\ 0 & 0 & 0.963 & 0 & 0 & 0.981 & 0.5 & 0 \end{pmatrix}.$$

Bei weiteren Verbindungsanfragen müssen weitere Kanalelemente freigegeben werden. Reicht die Reduktion der einem Teilnehmer zugewiesenen Kanalelemente auf den ersten Reduktionsfaktor RF1 nicht aus, so müssen beginnend von dem Teilnehmer mit der geringsten Dienstgüte die Anzahl der zugewiesenen Kanalelemente um den zweiten Reduktionsfaktor RF2 verringert werden.

Sind die freien Kanalelemente über eine große Anzahl von Zeitschlitzen verteilt, so dass die für eine Verbindung benötigten Kanalelemente auf mehr als vier Kanalelemente verteilt sind, so ist die maximale Anzahl der Zeitschlitze überschritten, über die eine Mobilstation senden beziehungsweise empfangen kann. In diesem Fall müssen zunächst die Kanalelemente, die einer Verbindung zugewiesen sind, rekonfiguriert werden in dem Sinne, dass sie über eine geringere Anzahl von Zeitschlitzen verteilt sind. Auf diese Weise werden auch die freien Kanalelemente auf eine geringere Anzahl von Zeitschlitzen verteilt. Dies gilt insbesondere auch für Mobilfunksysteme oder Implementierungen, die zusammenhängende Zeitschlitze erfordern.

Ändern sich die Funkbedingungen, so kann ein Wechsel zu einem anderen Kodierschema, auch Linkadaptation genannt, erforderlich werden. Dadurch ändert sich der Faktor $A_k$ des Teilnehmers k.

$$A_k = CS_Throughput_k \cdot (1\text{-}block_error_prob_k).$$

Damit verbunden ist darüber hinaus eine Änderung der Koeffizienten $p_{ik}$, um die zu erzielende Datenrate $RT_k$ konstant zu halten.

$$RT_k = A_k \cdot \sum_{i=1}^{N} p_{ik} \; .$$

Ändert sich das Kodierschema des ersten Teilnehmers 1 von CS-2 zu CS-3, so nimmt die Anzahl der erforderlichen Kanalelemente ab, da das höhere Kodierschema eine höhere Datenrate ermöglicht:

$$\sum_{i=1}^{N} p_{i1} = \frac{22 kbit/s}{14.4 kbit/s \cdot (1-0.1)} = 1.698 \; .$$

Das bedeutet, dass der erste Teilnehmer 1 0,339 Kanalelemente freigeben kann, da nunmehr nur 1,698 Kanalelemente benötigt werden im Vergleich zu 2,037 Kanalelementen zuvor.

Da es keine Verbindungen gibt, für die der Datenratenfaktor DF kleiner 0,1 ist, und da es keine wartenden Verbindungsanfragen gibt, wird nachfolgend überprüft, welche Verbindungen einen Datenratenfaktor DF kleiner 1 aufweisen. Dieses ist der Fall für den zweiten Teilnehmer 2 und den dritten Teilnehmer 3. Da der dritte Teilnehmer 3 eine höhere Dienstgütepriorität hat als der zweite Teilnehmer 2, werden die frei verfügbaren Kanalelemente dem dritten Teilnehmer 3 zugewiesen. Dadurch ändern sich die Koeffizienten $p_{21}$ von 1 auf 0,698, $p_{31}$ von 0,037 auf 0, $p_{23}$ von 0 auf 0,302 und $p_{33}$ von 0 auf 0,037. Da in diesem Fall die Anzahl der Zeitschlitze, die der Mobilstation 3 zugeordnet werden, den Maximalwert 4 überschreiten, muss eine Teil-Rekonfiguration durchgeführt werden, das heisst $p_{33}$ wird um 0.037 auf 0 reduziert und $p_{34}$ um diesen Wert erhöht. Das Matrixelement ändert sich damit von $p_{34}$ = 0.963 auf 1. Die durchgeführte Reduzierung der $p_{i3}$ Elemente für Verbindung 3 um 0.037 wird durch eine Erhöhung des Matrixelemtes $p_{73}$ um diesen Wert ausgeglichen. Somit ändert sich $p_{73}$ von 0.5 auf 0.573 und $p_{74}$ wird vom Wert 0.5 um 0.037 reduziert und beträgt nun 0.463. Damit werden einer Mobilstation maximal vier Zeitschlitze zugewiesen. Die Matrix $p_{ik}$ lautet somit

$$p_{ik} = \begin{pmatrix} 1 & 0.698 & 0 & 0 & 0 & 0 & 0 & 0 \\ 0 & 0 & 0 & 0 & 1 & 1-(0.981) & 0.037-(0.037) & 0 \\ 0 & 0.302 & 0 & 1 & 0 & 0 & 0.537 & 1 \\ 0 & 0 & 1 & 0 & 0 & 0.981 & 0.463 & 0 \end{pmatrix}$$

Werden durch die Änderung des Kodierschemas des ersten Teilnehmers 1 eine größere Anzahl von Kanalelementen freigegeben als erforderlich ist, um den Datenratenfaktor $DF_3$ des dritten Teilnehmers 3 von 0,818 auf 1 zu erhöhen, so wären die weiteren Kanalelemente dem zweiten Teilnehmer 2 zugewiesen worden.

Verschlechtern sich dagegen die Funkbedingungen für den ersten Teilnehmer 1, so dass für diesen eine Linkadaptation von Kodierschema CS-2 zu Kodierschema CS-1 durchgeführt werden muss, so benötigt der erste Teilnehmer 1 eine größere Anzahl an Kanalelementen, da die Datenrate in dem robusteren Kodierschema geringer ist. Es gilt

$$\sum_{i=1}^{N} p_{i1} = \frac{22kbit/s}{8kbit/s \cdot (1-0.1)} = 3.056 \ .$$

Das bedeutet, dass der erste Teilnehmer 1 1,019 Kanalelemente mehr benötigt, als bei Verwendung des Kodierschemas CS-2. Es müssen daher 1,019 Kanalelements - die Differenz zwischen 2,037 Kanalelementen bei CS-2 und 3,056 Kanalelementen bei CS-1 - freigegeben werden. Dazu wird die Anzahl der zugewiesenen Kanalelemente des Teilnehmers mit der geringsten Dienstgütepriorität reduziert. In diesem Beispeil ist es der zweite Teilnehmer 2, der gegenwärtig einen Datenratenparameter $DF_2$=0,5 aufweist. Der Teilnehmer mit der nächsthöheren Dienstgütepriorität ist der dritte Teilnehmer 3, für den gegenwärtig - ohne Berücksichtigung der Änderung durch die im Beispeil zuvor aufgeführte Linkadaptation zu einem weniger robusten Kodierschema - ein Datenratenparameter $DF_3$=0,818 gilt. Die Anzahl der dem Teilnehmer 3 zugewiesenen Kanalelemente, wird reduziert, so dass der Datenratenparameter $DF_3$ den Wert 0,5 annimmt. Dadurch werden 0,972 Kanalelemente freigegeben, die dem ersten Teilnehmer 1 zugewiesen werden können. Für den ersten Teilnehmer 1 fehlen immer noch 0,047 Kanalelemente, die von dem Teilnehmer nächsthöherer Priorität freigegeben werden müssen, sofern dieser Teilnehmer Kanalelemente abgeben kann.

Endet eine Verbindung, so werden die zugewiesenen Kanalelemente freigegeben. Endet beispielsweise die Verbindung des vierten Teilnehmers 4, so ändert sch die Matrix $p_{ik}$ gemäss des vorherigen Beispiels von

$$p_{ik} = \begin{pmatrix} 1 & 0.698 & 0 & 0 & 0 & 0 & 0 & 0 \\ 0 & 0 & 0 & 0 & 1 & 1-(0.981) & 0.037-(0.037) & 0 \\ 0 & 0.302 & 0 & 1 & 0 & 0 & 0.537 & 1 \\ 0 & 0 & 1 & 0 & 0 & 0.981 & 0.463 & 0 \end{pmatrix}$$

zu

$$p_{ik} = \begin{pmatrix} 1 & 0.698 & 0 & 0 & 0 & 0 & 0 & 0 \\ 0 & 0 & 0 & 0 & 1 & 1-(0.981) & 0.037-(0.037) & 0 \\ 0 & 0.302 & 0 & 1 & 0 & 0 & 0.537 & 1 \\ 0 & 0 & 0 & 0 & 0 & 0 & 0 & 0 \end{pmatrix}.$$

Es werden dabei ein Kanalelement auf dem dritten Zeitschlitz, 0,981 Kanalelemente auf dem sechsten Zeitschlitz und 0,463 Kanalelemente auf dem siebten Zeitschlitz freigegeben. Insgesamt werden somit 2,444 Kanalelemente freigegeben. Da keine neue Verbindung aufgebaut werden soll, können die freigegebenen Kanalelemente Verbindungen zugewiesen werden, die einen Datenratenparameter DF kleiner 1 haben. Dieses ist für den zweiten Teilnehmer 2 und den dritten Teilnehmer 3 der Fall. Da der dritten Teilnehmer 3 die höhere Dienstgütepriorität hat, werden die freien Kanalelemente zunächst dem dritten Teilnehmer 3 zugewiesen. Der dritte Teilnehmer 3 erhält 0,217 Kanalelemente, um einen Datenratenparameter $DF_3$ von 1 zu erreichen. Die freien Kanalelemente befinden sich auf dem dritten, sechsten und siebten Zeitschlitz, wobei im sechsten Zeitschlitz ein Anteil von 0,981 und im siebten Zeitschlitz ein Anteil von 0,463 frei sind und auf dem dritten Zeitschlitz ein Anteil von 1 frei ist. Es wird überprüft, auf welchen Zeitschlitzen der dritte Teilnehmer 3 bereits Anteile zugewiesen bekommen hat, und es wird versucht, die neu zugewiesenen Anteile auf diesen Zeitschlitzen zuzuweisen, um die Verteilung auf zu viele Zeitschlitze zu vermeiden. Ferner wird versucht, auf einem Zeitschlitz so wenige Teilnehmer wie möglich zu multiplexen. Da der dritte Teilnehmer 3 Anteile auf dem zweiten, dem vierten, dem siebten und dem achten Zeitschlitz belegt, und auf dem siebten Zeitschlitz ausreichend freie Kanalelemente zur Verfügung stehen, werden die zusätzlichen 0,217 Kanalelemente auf dem siebten Zeitschlitz zugewiesen. Es ergibt sich folgende Matrix $p_{ik}$

$$p_{ik} = \begin{pmatrix} 1 & 0.698 & 0 & 0 & 0 & 0 & 0 & 0 \\ 0 & 0 & 0 & 0 & 1 & 1-(0.981) & 0 & 0 \\ 0 & 0.302 & 0 & 1 & 0 & 0 & 0.754 & 1 \\ 0 & 0 & 0 & 0 & 0 & 0 & 0 & 0 \end{pmatrix}.$$

Der dritte Teilnehmer 3 erhält nun 0,302 Anteile auf Zeitschlitz 2, einen Anteil auf Zeitschlitz 4, 0,754 Anteile auf Zeitschlitz 7 und einen Anteil auf Zeitschlitz 8, was in Summer 3,056 Kanalelemente ergibt. Es verbleiben 2,227 Kanalelemente für weitere Teilnehmer. Der zweite Teilnehmer 2 weist einen Datenratenparameter $DF_2$ von 0,5 auf und belegt gegenwärtig 1,019 Kanalelemente. Durch Zuweisung von 1,019 Kanalelementen erreicht der zweite Teilnehmer 2 den Datenratenparameter $DF_2=1$. Da der zweite Teilnehmer 2 Anteile auf den fünften und sechsten Zeitschlitz belegt, erhält der zweite Teilnehmer 2 zusätzlich Anteile auf dem sechsten Zeitschlitz und auf dem siebten Zeitschlitz. Es ergibt sich die $p_{ik}$-Matrix zu

$$p_{ik} = \begin{pmatrix} 1 & 0.698 & 0 & 0 & 0 & 0 & 0 & 0 \\ 0 & 0 & 0 & 0 & 1 & 1 & 0.038 & 0 \\ 0 & 0.302 & 0 & 1 & 0 & 0 & 0.754 & 1 \\ 0 & 0 & 0 & 0 & 0 & 0 & 0 & 0 \end{pmatrix}.$$

Zusätzliche freie Kanalelemente beziehungsweise Anteile davon können nun verwendet werden, um Verbindungen höhere Datenraten als durch DF = 1 gegeben, zuzuweisen.

Erhöht sich das Verkehrsaufkommen für Verbindungen hoher Dienstgüte, wie dies zum Beispiel auch für Sprachverbindungen gilt, so kann die Anzahl der Kanalelemente, die Paketdatenverbindungen zugewiesen ist, reduziert werden. Umgekehrt können Kanalelemente, die von Sprachverbindungen freigegeben werden, vorübergehend für Paketdatenverbindungen verwendet werden.

Auf Grund von Änderungen der Funkbedingungen können sich die Blockfehlerwahrscheinlichkeiten ändern. Im Fall großer Änderungen ist dieses in der Regel mit einer Linkadaptation, das heisst, einem Wechsel des Kodierschemas verbunden. Bei schwächeren Schwankungen der Blockfehlerwahrscheinlichkeit ist ein Wechsel des Kodierschemas unter Umständen nicht erforderlich, die Anzahl der benötigten Kanalelemente ändert sich jedoch und wird neu berechnet, wenn die Änderung eine vorgegebene Schwelle überschreitet.

Bei hohem Verkehrsaufkommen wird die Anzahl der Kanalelemente, die Verbindungen mit geringerer Dienstgüte zugewiesen sind, reduziert, um die Verbindungen höherer Dienstgüte bevorzugt zu behandeln. Die Verkehrssituation kann zusätzlich durch hand over, durch Zuweisung einer Verbindung zu einer anderen Zelle oder durch Zuweisung von Sprachkanälen von full rate Kanälen auf half rate Kanäle entspannt werden. Dabei sollten stets die Eigenschaften der verwendeten Mobilstationen berücksichtigt werden.

Es liegt im Rahmen der Erfindung, über Schwellwerte gesteuert zu entscheiden, ab welcher Abweichung des Ist-Wertes vom Soll-Wert eine Rekonfiguration der Zeitschlitze durchgeführt werden soll. Ein Beispiel für eine Rekonfiguration der Zeitschlitze ist das Verschieben der Matrixelemente um eine Spalte. Da technologiebedingt eine Rekonfiguration der Zeitschlitze zu einer kurzzeitigen Reduzierung der Durchsatzrate führen kann, werden Schwellwerte definiert, die in Abhängigkeit von den Dienstgüte-Anforderungen eine Änderung der $p_{ik}$ Matrix auslösen oder aber eine gewisse Nichteinhaltung der angestrebten Datenrate tolerieren.

## Patentansprüche

1. Verfahren zur Datenübertragung in einem Funkkommunikationssystem,

    a) bei dem jedem Teilnehmer eine Dienstgüte zugeordnet wird,
    b) bei dem zum Aufbau einer neuen Verbindung, über die ein Dienst bedient werden soll, für einen Teilnehmer auf Grund der dem Teilnehmer zugeordneten Dienstgüte und der Funkverhältnisse und eine für die Datenübertragung über eine Schnittstelle des Funkkommunikationssystems erforderliche Anzahl von Kanalelementen bestimmt wird,

c) bei dem, falls die erforderliche Anzahl von Kanalelementen zur Verfügung steht, der Verbindung die Kanalelemente zugewiesen werden und die Verbindung aufgebaut wird,
d) bei dem, falls die erforderliche Anzahl von Kanalelementen nicht zur Verfügung steht und es mindestens eine Verbindung eines Teilnehmers mit einer geringerer Dienstgüte, als sie dem Teilnehmer der neuen Verbindung zugeordnet ist, gibt, dieser bestehenden Verbindung die Anzahl der zugewiesenen Kanalelemente reduziert wird und die übrigen Kanalelemente freigegeben werden, wobei die Anzahl der dieser Verbindung zugewiesenen Kanalelemente einen vorgegebenen Wert nicht unterschreitet,
e) bei dem, falls die Anzahl der freigegebenen Kanalelemente mindestens der erforderlichen Anzahl entspricht, die Verbindung aufgebaut wird.

**dadurch gekennzeichnet,**

**dass** die Reduktion der Anzahl der zugewiesenen Kanalelemente in zwei Schritten erfolgt, wobei in einem ersten Schritt sukzessive bei allen Verbindungen von Teilnehmern, deren Dienstgüte geringer ist als die des Teilnehmers der neuen Verbindung, die Anzahl der zugewiesenen Kanalelemente um einen ersten Faktor reduziert wird und in einem zweiten Schritt um einen zweiten Faktor reduziert wird, wobei der erste Faktor und der zweite Faktor vom jeweiligen Dienst abhängig sind.

**2.** Verfahren nach Anspruch 1, **dadurch gekennzeichnet, dass** ein Kanalelement durch einen Zeitschlitz auf einem Träger realisiert ist.

**3.** Verfahren nach Anspruch 2, **dadurch gekennzeichnet, dass** die einer Verbindung zugewiesenen Kanalelemente auf mindestens zwei Träger verteilt sind.

**4.** Verfahren nach einem der Ansprüche 1 bis 3, **dadurch gekennzeichnet, dass**, falls beim Aufbau der neuen Verbindung in dem Funkkommunikationssystem eine größere Anzahl an Kanalelementen zur Verfügung steht, als für den Aufbau der neuen Verbindung erforderlich ist, der neuen Verbindung zusätzliche Kanalelemente zugewiesen werden.

**5.** Verfahren nach Anspruch 4, **dadurch gekennzeichnet,**

- **dass**, falls die erforderliche Anzahl von Kanalelementen zum Aufbau der neuen Verbindung nicht zur Verfügung steht und mindestens einer bestehenden Verbindung eine größere Anzahl von Kanalelementen zugewiesen ist, als auf Grund der zugeordneten Dienstgüte und der Funkverhältnisse erforderlich ist, zunächst die Anzahl der Kanalelemente, die dieser bestehenden Verbindung zugewiesen sind, auf die erforderliche Anzahl reduziert wird und die zusätzlichen Kanalelemente freigegeben werden,
- **dass**, falls die Anzahl der freigegebenen Kanalelemente mindestens der erforderlichen Anzahl entspricht, die Verbindung aufgebaut wird.

**6.** Verfahren nach Anspruch 4 oder 5, **dadurch gekennzeichnet, dass** in dem Funkkommunikationssystem für jeden Teilnehmer ein Datenratenparameter gespeichert wird, der von der aktuell zugewiesenen Anzahl von Kanalelementen und der auf Grund der zugeordneten Dienstgüte und der Funkverhältnisse erforderlichen Anzahl von Kanalelementen abhängt.

**7.** Verfahren nach einem der Ansprüche 1 bis 6, **dadurch gekennzeichnet, dass** die einem Teilnehmer zugewiesenen Kanalelemente auf eine größere Anzahl von Kanalelementen verteilt werden, als es der zugewiesenen Anzahl von Kanalelementen entspricht.

**8.** Verfahren nach einem der Ansprüche 1 bis 7, **dadurch gekennzeichnet,**

- **dass** bei einer Beendigung einer Verbindung die der beendeten Verbindung zugewiesenen Kanalelemente freigegeben werden,
- **dass** die freigegebenen Kanalelemente Verbindungen zugewiesen werden, denen eine geringere Anzahl von Kanalelementen zugewiesen ist als der auf Grund der zugeordneten Dienstgüte und der Funkverhältnisse erforderlichen Anzahl von Kanalelementen.

**9.** Verfahren nach einem der Ansprüche 1 bis 8, **dadurch gekennzeichnet,**

- **dass** bei einer Beendigung einer Verbindung die der beendeten Verbindung zugewiesenen Kanalelemente freigegeben werden,

- **dass**, falls allen bestehenden Verbindungen mindestens die auf Grund der zugeordneten Dienstgüte und der Funkverhältnisse erforderliche Anzahl von Kanalelementen zugewiesen ist, mindestens ein Teil der freigegebenen Kanalelemente einer bestehenden Verbindung zugewiesen werden.

**10.** Verfahren nach einem der Ansprüche 1 bis 9, **dadurch gekennzeichnet,**

- **dass** bei einer Änderung der Funkverhältnisse für eine Verbindung die auf Grund der zugeordneten Dienstgüte und der geänderten Funkverhältnisse erforderliche Anzahl von Kanalelementen neu bestimmt wird,
- **dass**, falls die Anzahl der zugewiesenen Kanalelemente größer als die neu bestimmte erforderliche Anzahl von Kanalelementen ist, die überzähligen Kanalelemente freigegeben werden,
- **dass**, falls die Anzahl der zugewiesenen Kanalelemente kleiner als die neu bestimmte erforderliche Anzahl von Kanalelementen ist, für mindestens eine Verbindung eines Teilnehmers mit einer geringeren Dienstgüte, als sie dem Teilnehmer der Verbindung mit den geänderten Funkverhältnissen zugeordnet ist, die Anzahl der zugewiesenen Kanalelemente unter die auf Grund der zugeordneten Dienstgüte und der Funkverhältnisse erforderliche Anzahl reduziert wird, wobei ein vorgegebener Wert nicht unterschritten wird, und die übrigen Kanalelemente freigegeben werden und die freigegebenen Kanalelemente der Verbindung mit den geänderten Funkverhältnissen zugeordnet werden.

**11.** Verfahren nach einem der Ansprüche 1 bis 10, **dadurch gekennzeichnet, dass** die über die einzelnen Verbindungen bedienten Dienste in einer Liste geordnet werden und bei sich ändernden Funkbedingungen Kanalelemente von Verbindungen mit Diensten geringerer Priorität zu Verbindungen mit Diensten höherer Priorität verschoben werden, wobei zunächst auf die Verbindung mit dem Dienst niedrigster Priorität zugegriffen wird, um Kanalelemente für Verbindungen mit Diensten höherer Priorität zur Verfügung zu stellen und wobei bei der Zuweisung frei gewordener Kanalelemente zunächst Verbindungen mit Diensten mit höher Priorität bedient werden.

**12.** Verfahren nach einem der Ansprüche 1 bis 11, **dadurch gekennzeichnet, dass** der vorgegebene Wert, der bei der Reduktion der Anzahl der einer Verbindung zugewiesenen Kanalelemente nicht unterschritten wird, aus der auf Grund der zugeordneten Dienstgüte und der geänderten Funkverhältnisse erforderliche Anzahl von Kanalelementen durch Multiplikation mit einem Faktor bestimmt wird.

**13.** Verfahren nach einem der Ansprüche 1 bis 12, **dadurch gekennzeichnet, dass** zur Steuerung der Kanalelementzuweisung eine Matrix verwendet wird, deren Spalten den Kanalelementen eines Kanals zugeordnet sind und deren Zeilen den Verbindungen zugeordnet sind, wobei die Matrixelemente jeweils den Anteil des jeweiligen Kanalelementes, der der zugehörigen Verbindung zugewiesen ist, angeben.

**14.** Verfahren nach Anspruch 13, **dadurch gekennzeichnet, dass** die Spalten der Matrix als Spaltenvektor zur Steuerung der Datenübertragung in dem jeweiligen Kanalelement verwendet werden.

**15.** Verfahren nach Anspruch 13 oder 14, **dadurch gekennzeichnet,**

- **dass** den Teilnehmern jeweils ein Anteil $v_i$, i=l...n eines Kanalelementes j zugewiesen wird,
- **dass** zur Datenübertragung das Kanalelement j jeweils demjenigen Teilnehmer k zugewiesen wird, dem der größte Anteil $v_k$ zugewiesen ist, so dass für alle Teilnehmer $i \neq k$ gilt $v_k > v_i$,
- **dass** der Anteil $v_k$ um 1 verringert wird und auf die Anteile $v_i$ aller Teilnehmer jeweils der anfängliche Wert des Anteils $v_i$ dazu addiert wird.

**16.** Verfahren nach Anspruch 1 bis 15, **dadurch gekennzeichnet,**

- **dass** die erforderliche Anzahl an Kanalelementen gemäß der zu erzielende Datenrate, für Dienste mit Echtzeit-Anforderungen aus einer für den Dienst garantierten Datenrate und einer Durchsatzrate eines verwendeten Kodierschemas sowie Blockfehlerraten, beziehungsweise Blockfehlerwahrscheinlichkeiten, berechnet wird,
- **dass** die geforderte Anzahl an Kanalelementen für Dienste mit Nicht-Echtzeit-Anforderungen auf Grund einer vom Netz vorgesehenen Datenrate, einer Durchsatzrate eines verwendeten Kodierschemas und einer Blockfehlerrate, beziehungsweise Blockfehlerwahrscheinlichkeit berechnet wird, wobei die vom Netz vorgesehene Datenrate als Anteil einer maximal möglichen Durchsatzrate bestimmt wird, oder über Voreinstellungen und der übermittelten Dienstgüte-Anforderungen gewählt wird,
- **dass** die geforderte Anzahl an Kanalelementen wahlweise auch gemäß einer maximalen Übertragungs-/Verzögerungszeit beziehungsweise einer bestimmten Zuverlässigkeit berechnet wird.

## Claims

**1.** Method for data transmission in a radio communication system,

a) in which each subscriber is assigned a quality of service,
b) in which, to set up a new connection over which a service is to be operated, a required number of channel elements for data transmission over an interface of the radio communication system is determined for a subscriber, based on the quality of service assigned to the subscriber and the radio conditions,
c) in which, if the required number of channel elements is available, the channel elements are assigned to the connection and the connection is established,
d) in which, if the required number of channel elements is not available and there is at least one connection of a subscriber with a lower quality of service than is assigned to the subscriber of the new connection, the number of channel elements assigned to this existing connection is reduced and the remaining channel elements are released, with the number of channel elements assigned to this connection not falling below a predetermined value,
e) in which, if the number of released channel elements corresponds to at least the required number, the connection is established.

**characterized in that**,
the number of assigned channel elements is reduced in two stages, with a first stage in which successively for all connections of subscribers for whom the quality of service is lower than that of the subscriber of the new connection, the number of assigned channel elements is reduced by a first factor and in a second stage is reduced by a second factor, with the first factor and the second factor depending on the relevant service.

**2.** Method in accordance with claim 1, **characterized in that** a channel element is implemented by a time slot on a carrier.

**3.** Method in accordance with claim 2, **characterized in that** the channel elements assigned to a connection are distributed between at least two carriers.

**4.** Method in accordance with one of the claims 1 to 3, **characterized in that**, if when the new connection is established in the radio communication system a larger number of channel elements is available than are required to establish the new connection, the new connection is assigned additional channel elements.

**5.** Method in accordance with claim 4, **characterized in that**,

- if the required number of channel elements to establish the new connection is not available and at least one existing connection is assigned a larger number of channel elements than is required based on the assigned quality of service and the radio conditions, the number of channel elements which is assigned the this existing connection is reduced to the required number and the additional channel elements are released,
- if the number of released channel elements corresponds to at least the required number, the connection is established.

**6.** Method in accordance with claim 4 or 5, **characterized in that**, for each subscriber, a data rate parameter is stored in the radio communication system which depends on the currently assigned number of channel elements and the required number of channel elements based on the assigned quality of service and the radio conditions.

**7.** Method in accordance with one of the claims 1 to 6,
**characterized in that** the channel elements assigned to a subscriber are distributed over a larger number of channel elements than that corresponding to the assigned number of channel elements.

**8.** Method in accordance with one of the claims 1 to 7,
**characterized in that**

- when a connection is ended, the channel elements assigned to the ended connection are released,

- the released channel elements are assigned to connections to which a lower number of channel elements are assigned than the number of channel elements assigned on the basis of the assigned qualities of service and the radio conditions.

**9.** Method in accordance with one of the claims 1 to 8,
**characterized in that**

- when a connection is ended, the channel elements assigned to the ended connection are released,
- if all existing connections are assigned the required number of channel elements at least based on the assigned qualities of service and the radio conditions, at least a part of the released channel elements is assigned to an existing connection.

**10.** Method in accordance with one of the claims 1 to 9,
**characterized in that**

- if there is a change to the radio conditions for a connection the required number of channel elements based on the assigned qualities of service and the changed radio conditions is redefined,
- if the number of the assigned channel elements is greater than the new defined required number of channel elements the superfluous channel elements are released,
- if the number of assigned channel elements is less than the newly defined required number of channel elements, for at least one connection of a subscriber with a lower quality of service than that assigned to the subscriber of the connection with the changed radio conditions, the number of assigned channel elements is reduced to below the number required on the basis of the assigned quality of service and the radio conditions, with the number not being reduced below a predetermined value, and the remaining channel elements are released and the released channel elements assigned to the connection with the changed radio conditions.

**11.** Method in accordance with one of the claims 1 to 10, **characterized in that** the services operated over the individual data connections are arranged in a list and, if radio conditions change, channel elements of connections with services of lower priority are moved to connections with services of higher priority, with the connection with the service of lowest priority initially being accessed, to make available channel elements for connections with services of higher priority and whereby, for assignment of released channel elements connections with services with higher priority are operated initially.

**12.** Method in accordance with one of the claims 1 to 11, **characterized in that** the predetermined value below which the number of channels assigned to a connection must not fall when the number of assigned channels is reduced is determined from the required number of channel elements based on the assigned quality of service and the changed radio conditions by multiplying it by a factor.

**13.** Method in accordance with one of the claims 1 to 12,
**characterized in that** to control the channel element assignment a matrix is employed of which the columns are assigned to the channel elements of a channel and of which the rows are assigned to connections, with the matrix elements each specifying the proportion of the relevant channel elements which is assigned to the associated connection.

**14.** Method in accordance with claim 13, **characterized in that** the columns of the matrix are used as a column vector for controlling the data transmission in the relevant channel element.

**15.** Method in accordance with claim 14 or 14, **characterized in that**

- the subscribers are each assigned a proportion $v_i$, i=1...n of a channel element j,
- for data transmission the channel element j is assigned in each case to that subscriber k to which the largest proportion $V_k$ is assigned, so that for all subscribers $l \neq k$, $V_k > V_i$ applies,
- the proportion $v_k$ is reduced by 1 and in each case the initial value of the proportion $v_i$ is added to the proportions $v_i$ of all subscribers.

**16.** Method in accordance with claim 1 to 15, **characterized in that**

- the required number of channel elements is computed in accordance with the data rate to be achieved, for services with realtime requirements from a data rate guaranteed for the service and of a throughput rate of a coding scheme used as well as block error rates, or block error probabilities respectively,

- the required number of channel elements for services with non-realtime requirements is selected on the basis of a data rate provided by the network, of a throughput rate of a coding scheme used and of a block error rate or a block error probability respectively, with the data rate provided by the network being determined as a proportion of a maximum possible throughput rate, or is selected using defaults and the transferred quality of service requirements,
- the required number of channel elements is optionally also calculated in accordance with a maximum transmission/delay time or a specific reliability respectively.

## Revendications

1. Méthode pour la transmission de données dans un système de radiocommunication, dans laquelle

    a) une qualité de service est allouée à chaque abonné,
    b) pour l'établissement d'une nouvelle connexion par l'intermédiaire de laquelle il s'agit de desservir un service est déterminé, pour un abonné, un nombre d'éléments de canal qui est requis compte tenu de la qualité de service allouée à l'abonné et des conditions radio ainsi que pour la transmission de données via une interface du système de communication,
    c) au cas où le nombre requis d'éléments de canal est disponible, les éléments de canal sont alloués à la connexion et il est procédé à l'établissement de la connexion,
    d) au cas où le nombre requis d'éléments de canal n'est pas disponible et où il y a au moins une connexion d'un abonné avec une qualité de service inférieure à celle qui est allouée à l'abonné de la nouvelle connexion, on réduit le nombre des éléments de canal alloués pour cette connexion existante et les éléments de canal restants sont libérés, le nombre des éléments de canal alloués à cette connexion ne dépassant pas par le bas une valeur donnée,
    e) au cas où le nombre des éléments de canal libérés correspond au moins au nombre requis, il est procédé à l'établissement de la connexion,

    **caractérisée en ce**

    **que** la réduction du nombre des éléments de canal alloués se fait en deux étapes, le nombre des éléments de canal alloués subissant une réduction d'un premier facteur, dans une première étape, et ce, successivement pour toutes les connexions d'abonnés avec une qualité de service inférieure à celle de l'abonné de la nouvelle connexion, et subissant une réduction d'un deuxième facteur, dans une deuxième étape, le premier facteur et le deuxième facteur dépendant du service respectif.

2. Méthode selon la revendication 1, **caractérisée en ce qu'**un élément de canal est réalisé par un créneau temporel sur une porteuse.

3. Méthode selon la revendication 2, **caractérisée en ce que** les éléments de canal alloués à une connexion sont répartis sur au moins deux porteuses.

4. Méthode selon l'une des revendications 1 à 3, **caractérisée en ce que**, au cas où est disponible, lors de l'établissement de la nouvelle connexion, dans le système de radiocommunication, un nombre d'éléments de canal plus grand que requis pour l'établissement de la nouvelle connexion, des éléments de canal supplémentaires sont alloués à la nouvelle connexion.

5. Méthode selon la revendication 4, **caractérisée en ce que**

    - au cas où le nombre requis d'éléments de canal n'est pas disponible pour l'établissement de la nouvelle connexion et si est alloué, au moins à une connexion existante, un nombre d'éléments de canal plus grand que requis compte tenu de la qualité de service allouée et des conditions radio, on réduit tout d'abord au nombre requis le nombre des éléments de canal qui sont alloués à cette connexion existante et les éléments de canal supplémentaires sont libérés,
    - au cas où le nombre des éléments de canal libérés correspond au moins au nombre requis, il est procédé à l'établissement de la connexion.

**6.** Méthode selon la revendication 4 ou 5, **caractérisée en ce qu'**est mis en mémoire, dans le système de radiocommunication, pour chaque abonné, un paramètre de débit de données qui dépend du nombre actuellement alloué d'éléments de canal et du nombre d'éléments de canal qui est requis compte tenu de la qualité de service allouée et des conditions radio.

**7.** Méthode selon l'une des revendications 1 à 6, **caractérisée en ce que** les éléments de canal alloués à un abonné sont répartis sur un nombre d'éléments de canal plus grand que ce qui correspond au nombre alloué d'éléments de canal.

**8.** Méthode selon l'une des revendications 1 à 7, **caractérisée en ce que**

- lorsqu'il est mis fin à une connexion, les éléments de canal alloués à la connexion terminée sont libérés,
- les éléments de canal libérés sont alloués à des connexions auxquelles est alloué un nombre d'éléments de canal plus petit que le nombre d'éléments de canal qui est requis compte tenu de la qualité de service allouée et des conditions radio.

**9.** Méthode selon l'une des revendications 1 à 8, **caractérisée en ce que**

- lorsqu'il est mis fin à une connexion, les éléments de canal alloués à la connexion terminée sont libérés,
- au cas où au moins le nombre d'éléments de canal qui est requis compte tenu de la qualité de service allouée et des conditions radio est alloué à toutes les connexions existantes, au moins une partie des éléments de canal libérés est allouée à une connexion existante.

**10.** Méthode selon l'une des revendications 1 à 9, **caractérisée en ce que**

- en cas de modification des conditions radio pour une connexion, on redéfinit le nombre d'éléments de canal qui est requis compte tenu de la qualité de service allouée et des conditions radio modifiées;
- au cas où le nombre des éléments de canal alloués est supérieur au nombre requis d'éléments de canal qui a été redéfini, les éléments de canal surnuméraires son libérés;
- au cas où le nombre des éléments de canal alloués est inférieur au nombre requis d'éléments de canal qui a été redéfini, on réduit, pour au moins une connexion d'un abonné avec une qualité de service inférieure à celle allouée à l'abonné de la connexion avec les conditions radio modifiées, le nombre des éléments de canal alloués pour le faire passer en dessous du nombre requis compte tenu de la qualité de service allouée et des conditions radio, une valeur donnée n'étant pas dépassée par le bas et les éléments de canal restants étant libérés et les éléments de canal libérés étant alloués à la connexion avec les conditions radio modifiées.

**11.** Méthode selon l'une des revendications 1 à 10, **caractérisée en ce que** les services desservis par l'intermédiaire des connexions individuelles sont ordonnés dans une liste et qu'en cas de modification des conditions radio on décale des éléments de canal de connexions avec des services de priorité moindre vers des connexions avec des services de priorité plus élevée, tout en étant qu'il est d'abord accédé à la connexion avec le service de priorité la plus basse pour mettre à disposition des éléments de canal pour des connexions avec des services de priorité plus élevée et des connexions avec des services de priorité plus élevée étant desservies en premier lieu lors de l'allocation d'éléments de canal devenus libres.

**12.** Méthode selon l'une des revendications 1 à 11, **caractérisée en ce que** la valeur donnée qui n'est pas dépassée par le bas lors de la réduction du nombre des éléments de canal alloués à une connexion est déterminée par multiplication par un facteur, à partir du nombre d'éléments de canal qui est requis compte tenu de la qualité de service allouée et des conditions radio modifiées.

**13.** Méthode selon l'une des revendications 1 à 12, **caractérisée en ce que**, pour la commande de l'allocation d'éléments de canal, on utilise une matrice dont les colonnes sont affectées aux éléments de canal d'un canal et les lignes sont affectées aux connexions, les éléments de la matrice indiquant respectivement la fraction de l'élément de canal respectif qui est allouée à la connexion associée.

**14.** Méthode selon la revendication 13, **caractérisée en ce que** les colonnes de la matrice sont utilisées en tant que vecteur de colonne pour la commande de la transmission de données dans l'élément de canal respectif.

**15.** Méthode selon la revendication 13 ou 14, **caractérisée en ce que**

- respectivement une fraction $v_i$, i = 1 ... n d'un élément de canal j est allouée aux abonnés,
- pour la transmission de données, l'élément de canal j est alloué respectivement à l'abonné k auquel est allouée la plus grande fraction $v_k$ de sorte qu'on a pour tous les abonnés $i \neq k$: $v_k > v_i$,
- la fraction $v_k$ est réduite de 1 et la valeur de départ de la fraction $v_i$ est additionnée respectivement aux fractions $v_i$ de tous les abonnés.

**16.** Méthode selon l'une des revendications 1 à 15, **caractérisée en ce que**

- le calcul du nombre requis d'éléments de canal conformément au débit de données à obtenir se fait, pour des services avec des exigences en temps réel, à partir d'un débit de données garanti pour le service et d'un débit de transfert d'un schéma de codage utilisé ainsi que de taux d'erreurs de blocs respectivement de probabilités d'erreurs de blocs,
- le calcul du nombre requis d'éléments de canal se fait, pour des services avec des exigences non en temps réel, sur la base d'un débit de données prévu par le réseau, d'un débit de transfert d'un schéma de codage utilisé et d'un taux d'erreurs de blocs respectivement d'une probabilité d'erreurs de blocs, le débit de données prévu par le réseau étant déterminé en tant que fraction d'un débit de données maximalement possible ou étant choisi par l'intermédiaire de préréglages et des exigences de qualité de service transmises,
- le calcul du nombre requis d'éléments de canal se fait aussi, au choix, conformément à un temps maximal de transmission / de retard respectivement d'une fiabilité déterminée.

FIG 1

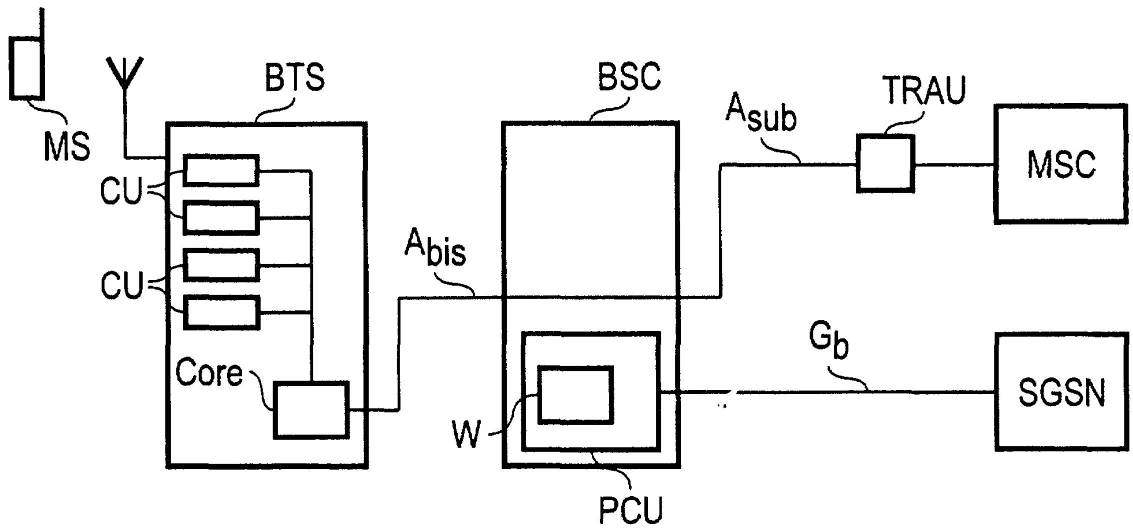

FIG 2

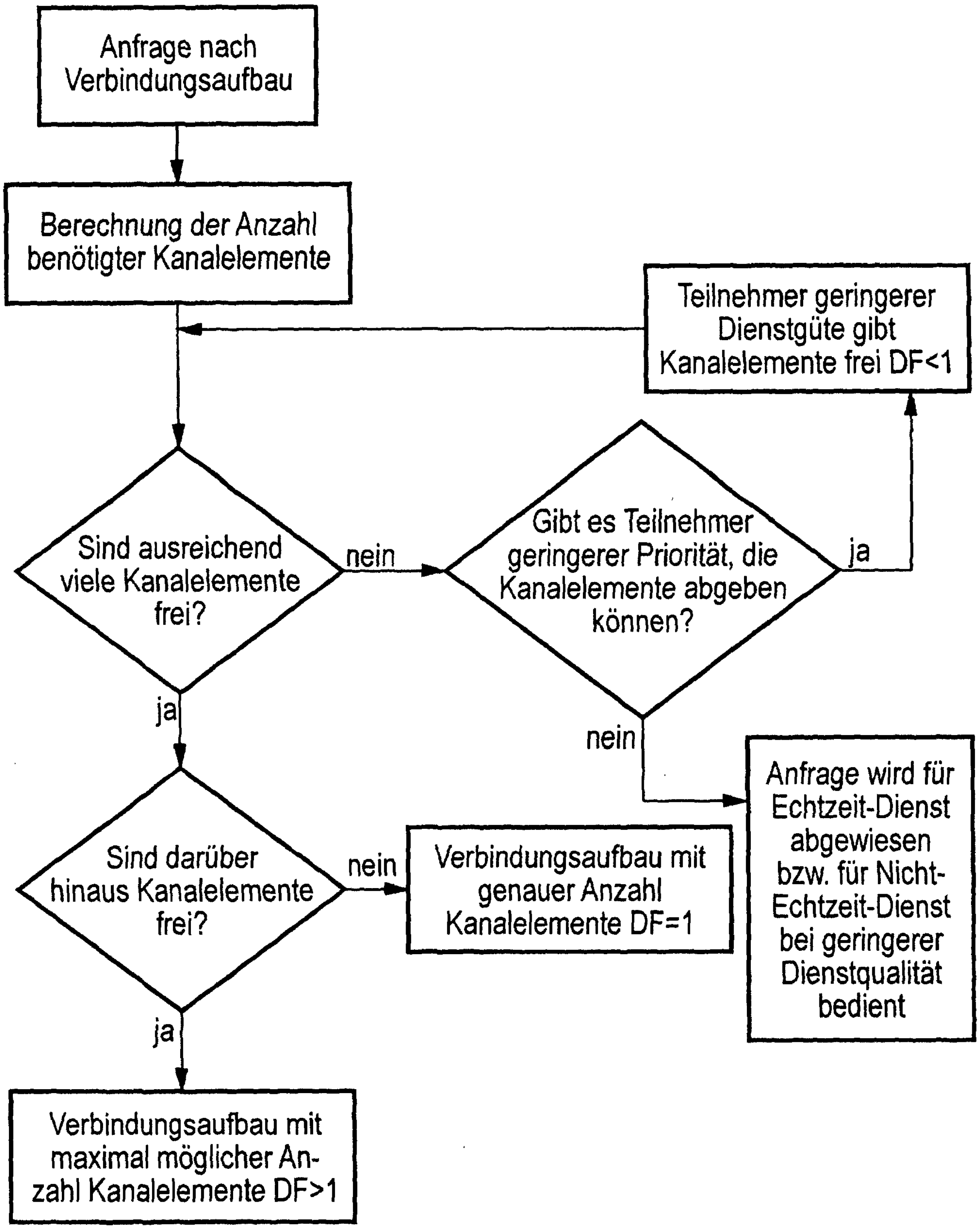
Anfrage nach Verbindungsaufbau
Berechnung der Anzahl benötigter Kanalelemente
Teilnehmer geringerer Dienstgüte gibt Kanalelemente frei DF<1
Sind ausreichend viele Kanalelemente frei?
nein
Gibt es Teilnehmer geringerer Priorität, die Kanalelemente abgeben können?
ja
ja
nein
Anfrage wird für Echtzeit-Dienst abgewiesen bzw. für Nicht-Echtzeit-Dienst bei geringerer Dienstqualität bedient
Sind darüber hinaus Kanalelemente frei?
nein
Verbindungsaufbau mit genauer Anzahl Kanalelemente DF=1
ja
Verbindungsaufbau mit maximal möglicher Anzahl Kanalelemente DF>1

FIG 3

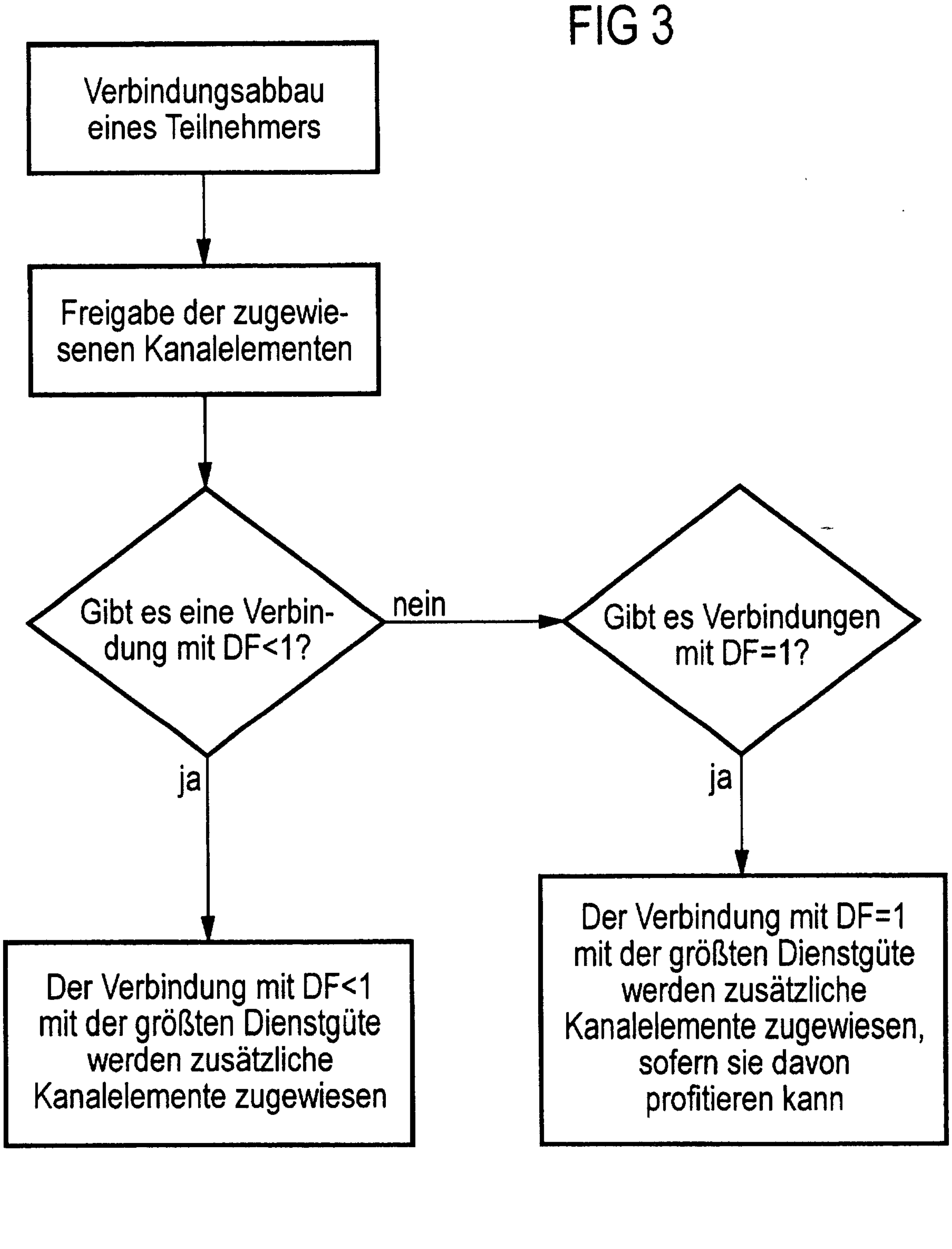
Verbindungsabbau eines Teilnehmers
Freigabe der zugewiesenen Kanalelementen
Gibt es eine Verbindung mit DF<1?
nein
Gibt es Verbindungen mit DF=1?
ja
ja
Der Verbindung mit DF<1 mit der größten Dienstgüte werden zusätzliche Kanalelemente zugewiesen
Der Verbindung mit DF=1 mit der größten Dienstgüte werden zusätzliche Kanalelemente zugewiesen, sofern sie davon profitieren kann

FIG 4

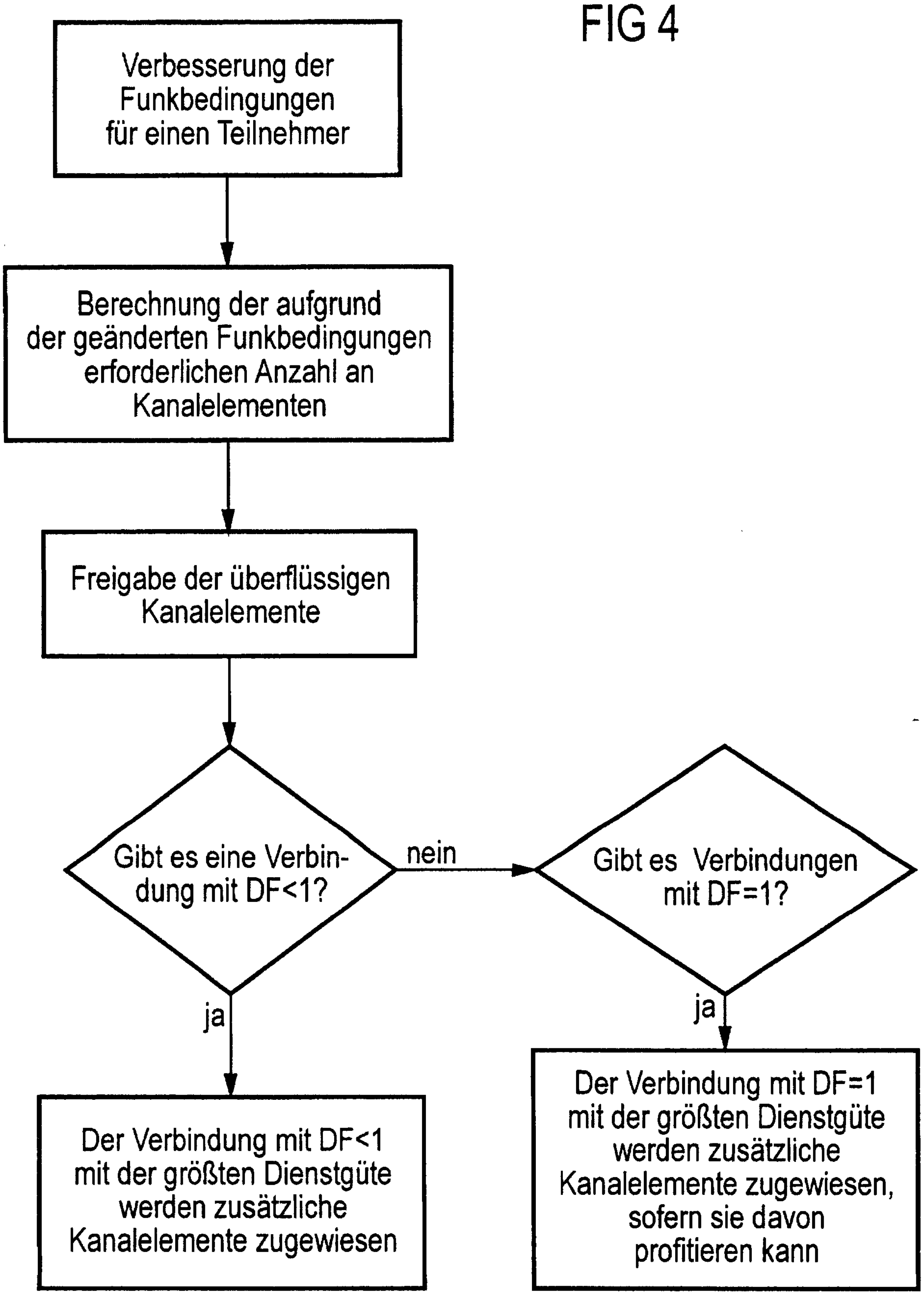
Verbesserung der Funkbedingungen für einen Teilnehmer
Berechnung der aufgrund der geänderten Funkbedingungen erforderlichen Anzahl an Kanalelementen
Freigabe der überflüssigen Kanalelemente
Gibt es eine Verbindung mit DF<1?
nein
Gibt es Verbindungen mit DF=1?
ja
ja
Der Verbindung mit DF<1 mit der größten Dienstgüte werden zusätzliche Kanalelemente zugewiesen
Der Verbindung mit DF=1 mit der größten Dienstgüte werden zusätzliche Kanalelemente zugewiesen, sofern sie davon profitieren kann

FIG 5

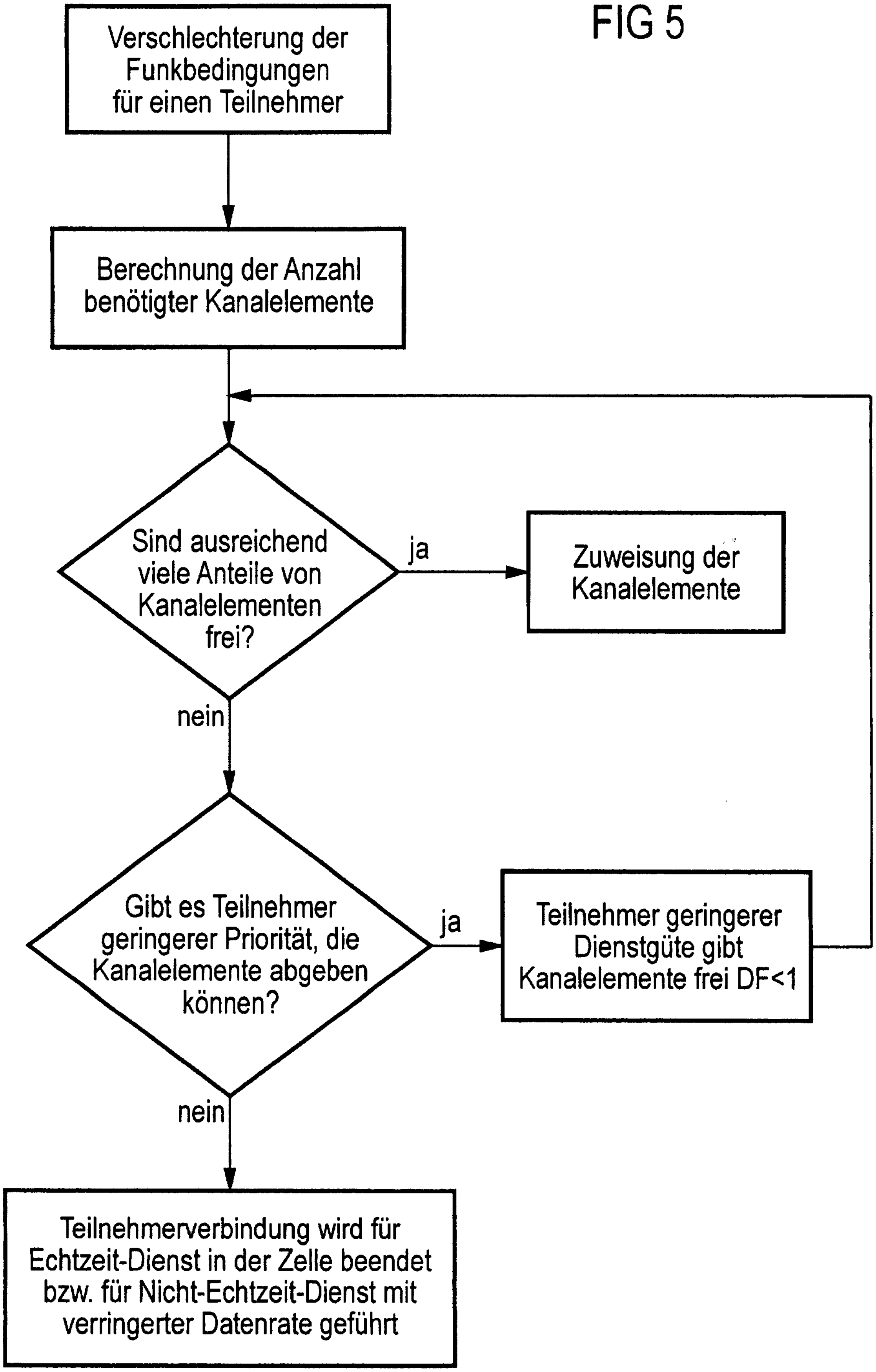
Verschlechterung der Funkbedingungen für einen Teilnehmer
Berechnung der Anzahl benötigter Kanalelemente
Sind ausreichend viele Anteile von Kanalelementen frei?
ja
Zuweisung der Kanalelemente
nein
Gibt es Teilnehmer geringerer Priorität, die Kanalelemente abgeben können?
ja
Teilnehmer geringerer Dienstgüte gibt Kanalelemente frei DF<1
nein
Teilnehmerverbindung wird für Echtzeit-Dienst in der Zelle beendet bzw. für Nicht-Echtzeit-Dienst mit verringerter Datenrate geführt